(19) Europäisches Patentamt
European Patent Office
Office européen des brevets

(11) **EP 4 654 511 A1**

(12) **EUROPEAN PATENT APPLICATION**
published in accordance with Art. 153(4) EPC

(43) Date of publication:
**26.11.2025  Bulletin 2025/48**

(21) Application number: **24744117.3**

(22) Date of filing: **09.01.2024**

(51) International Patent Classification (IPC):
**H04L 5/00** (2006.01)

(52) Cooperative Patent Classification (CPC):
**H04L 5/00; H04W 52/02; H04W 72/0446;
H04W 76/28**

(86) International application number:
**PCT/CN2024/071274**

(87) International publication number:
**WO 2024/152941 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.01.2023  CN 202310200324**

(71) Applicant: **Apogee Networks, LLC
Dallas, TX 75201 (US)**

(72) Inventors:
• **YU, Qiaoling
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD IN COMMUNICATION NODE USED FOR WIRELESS COMMUNICATION, AND APPARATUS**

(57)    Disclosed in the present application are a method in a communication node used for wireless communication, and an apparatus. A communication node receives a first signaling and a second signaling, the first signaling being used for configuring at least the former of a resource occupied by at least a first RS resource in the frequency domain and a time-domain resource occupied by the at least first RS resource on a physical resource block, the second signaling being used for determining a first time-domain resource, and the first time-domain resource comprising a first time slot; and, on the at least first RS resource, receives a reference signal, whether the at least first RS resource occupies in the time domain a time-domain resource of the first time slot depending on at least one of the length of the first time-domain resource and the position of the first time slot in the first time-domain resource. The present application reduces the time slot occupied by the at least first RS resource in the first time-domain resource, helping to save network energy.

FIG. 1

**Description**

**Technical Field**

The present application relates to a transmission method and apparatus in a wireless communication system, and in particular to a transmission method and apparatus for a reference signal.

**Background Art**

Network Energy Saving (NES) is of great significance for environmental sustainability, reducing an impact (greenhouse gas emissions) on environment, and saving operating costs. With the popularization of 5G (the 5th Generation Partnership Project) in industries and geographic regions, very high data rates are required to handle more advanced services and applications (such as XR), resulting in increasingly dense networks, the use of more antennas, larger bandwidths, and more frequency bands. In order to keep the impact of the 5G on the environment within a controllable range, new solutions need to be studied to improve network energy saving. Therefore, the RAN#94 meeting of 3GPP (the 3rd Generation Partnership Project) passed a study item (SI) of "Study on network energy savings", which supports technical enhancements in time domain, frequency domain, spatial domain, power domain, etc.

**Summary of the Invention**

A reference signal (RS) plays an important role in wireless communication. In the existing system, the network configures an RS resource for receiving the reference signal for UE, and sends the reference signal on the configured RS resource. The UE executes measurements on the configured RS resource and obtains measurement information, such as channel measurement information or interference measurement information. The inventor has found that if the reference signal is sent in each time slot configured to this RS resource, it does not help to save network energy. If the reference signal is not sent in each time slot configured to this RS resource, the UE cannot obtain the measurement information in a timely manner. Therefore, the reception of the reference signal needs to be enhanced; and in particular, when a base station is in a network energy saving state, for example, DTX of a cell is configured, the reception of the reference signal needs to be enhanced.

In view of the above problems, the present application provides a solution for receiving the reference signal. In the description of the above problems, an NR system is used as an example; the present application is also applicable to scenarios such as an LTE (Long-Term Evolution) system; further, although the present application provides a specific implementation for DTX, the present application can also be used in scenarios such as DRX (Discontinuous Reception) to achieve technical effects similar to those of the DTX. Further, although the present application provides a specific implementation for DTX, the present application can also be used in scenarios such as SCell (Secondary Cell) deactivation to achieve technical effects similar to those of the DTX. Further, although the present application provides a specific implementation for DTX, the present application can also be used in scenarios such as SCG (Secondary Cell Group) deactivation to achieve technical effects similar to those of the DTX. Further, although the present application provides a specific implementation for an RRC_CONNECTED state, the present application can also be used in scenarios such as an RRC_INACTIVE state or an RRC_IDLE state to achieve technical effects similar to those of the RRC_CONNECTED state. Further, although the present application provides a specific implementation for a CSI (Channel-state information)-RS (reference signal), the present application can also be used in scenarios such as an SSB (Synchronization Signal Block) to achieve technical effects similar to those of the CSI-RS. Further, although the original intention of the present application is for a Uu air interface, the present application can also be used for a PC5 interface. Further, although the original intention of the present application is for a terminal and base station scenario, the present application is also applicable to a V2X (Vehicle-to-Everything) scenario, and communication scenarios between a terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, the interpretation of terminologies in the present application refers to the definition in the specification protocol TS36 series of 3GPP.

As one embodiment, the interpretation of the terminologies in the present application refers to the definition in the specification protocol TS38 series of 3GPP.

As one embodiment, the interpretation of the terminologies in the present application refers to the definition in the specification protocol TS37 series of 3GPP.

As one embodiment, the interpretation of the terminologies in the present application refers to the definition in the specification protocol of IEEE (Institute of Electrical and Electronics Engineers).

It should be noted that, in the absence of conflict, embodiments and features in the embodiments in any node of the present application can be applied to any other node. In the absence of conflict, the embodiments and the features in the embodiments of the present application can be arbitrarily combined with each other.

The present application discloses a method in a first node used for wireless communication, characterized by comprising:

receiving a first signaling and a second signaling, the first signaling being used for configuring at least the former of a resource occupied by at least a first RS resource in a frequency domain and a time-domain resource occupied by the at least first RS resource on a physical resource block (PRB), the second signaling being used for determining a first time-domain resource, and the first time-domain resource comprising a first time slot; and, on the at least first RS resource, receiving a reference signal,

wherein whether the at least first RS resource occupies in a time domain the time-domain resource of the first time slot depends on at least one of a length of the first time-domain resource and a position of the first time slot in the first time-domain resource.

As one embodiment, the problem to be solved by the present application comprises: how to determine a time slot occupied by at least the first RS resource in the time domain.

As one embodiment, the problem to be solved by the present application comprises: how to determine whether at least the first RS resource occupies in the time domain the first time slot.

As one embodiment, the problem to be solved by the present application comprises: how to determine whether at least the first RS resource occupies in the time domain one time slot in the first time-domain resource.

As one embodiment, the characteristics of the above method comprise: whether the at least first RS resource occupies in the time domain the time-domain resource of the first time slot depends on the length of the first time-domain resource of the length of the first time-domain resource and the position of the first time slot in the first time-domain resource.

As one embodiment, the characteristics of the above method comprise: whether the at least first RS resource occupies in the time domain the time-domain resource of the first time slot depends on the position of the first time slot in the first time-domain resource of the length of the first time-domain resource and the position of the first time slot in the first time-domain resource.

As one embodiment, the characteristics of the above method comprise: whether the at least first RS resource occupies in the time domain the time-domain resource of the first time slot depends on both the length of the first time-domain resource and the position of the first time slot in the first time-domain resource.

As one embodiment, benefits of the above method comprise: helping to save network energy.

As one embodiment, the benefits of the above method comprise: helping to save energy of the first node.

As one embodiment, the benefits of the above method comprise: being able to obtain measurement information in a timely manner.

According to one aspect of the present application, the above method is characterized in that the first signaling configures the first time slot to each RS resource in the at least first RS resource.

As one embodiment, the characteristics of the above method comprise: whether the at least first RS resource occupies in the time domain the time-domain resource of the first time slot configured to each RS resource in the at least first RS resource depends on at least one of the length of the first time-domain resource and the position of the first time slot in the first time-domain resource.

As one embodiment, the benefits of the above method comprise: helping to save network energy.

According to one aspect of the present application, the above method is characterized in that the at least first RS resource comprises a plurality of RS resources, and the first time slot is not configured to at least one RS resource in the plurality of RS resources.

According to one aspect of the present application, the above method is characterized by comprising:

receiving a first message, the first message being one RRC (Radio Resource Control) message, and the first message comprising a first time length and a first cycle length of first DTX,

wherein at least the first time length is used for determining an active time of the first DTX; at least the first cycle length is used for determining a duration of each DTX cycle of the first DTX; and the first time-domain resource belongs to an inactive time of the first DTX.

As one embodiment, the characteristics of the above method comprise: during the inactive time of the first DTX, determining whether the at least first RS resource occupies in the time domain the time-domain resource of the first time slot according to at least one of the length of the first time-domain resource and the position of the first time slot in the first time-domain resource.

As one embodiment, the characteristics of the above method comprise: during the inactive time of the first DTX, determining the time slot occupied by the at least first RS resource in the time domain according to at least one of the length of the first time-domain resource and the position of the first time slot in the first time-domain resource.

As one embodiment, the benefits of the above method comprise: during the inactive time of the first DTX, reducing the time slot occupied by at least the first RS resource in the first time-domain resource.

As one embodiment, the benefits of the above method comprise: helping to save network energy, and being able to execute measurements in a timely manner.

According to one aspect of the present application, the above method is characterized in that the second signaling is received after the first message is received; and the second signaling is a signaling of a protocol layer below an RRC sublayer.

According to one aspect of the present application, the above method is characterized in that only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

As one embodiment, the characteristics of the above method comprise: whether the at least first RS resource occupies in the time domain the time-domain resource of the first time slot depends on whether the first time slot belongs to the first sub-time-domain resource.

According to one aspect of the present application, the above method is characterized in that the first sub-time-domain resource depends on a target timer, and a moment when the target timer expires is used for determining a starting moment of the first sub-time-domain resource.

As one embodiment, the benefits of the above method comprise: determining the first sub-time-domain resource according to the target timer, which is easy to implement.

According to one aspect of the present application, the above method is characterized in that the first time-domain resource comprises at least one sub-time-domain resource, and each sub-time-domain resource in the at least one sub-time-domain resource is one subset of the first time-domain resource; only when the first time slot belongs to any one of the at least one sub-time-domain resource, the at least first RS resource occupies in the time domain the time-domain resource of the first time slot; and whether the at least first RS resource occupies in the time domain the time-domain resource of the first time slot depends on the position of the first time slot in the first time-domain resource.

As one embodiment, the characteristics of the above method comprise: whether the at least first RS resource occupies in the time domain the time-domain resource of the first time slot depends on whether the first time slot belongs to any one of the first sub-time-domain resource.

The present application discloses a method in a second node used for wireless communication, characterized by comprising:

sending a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,

wherein whether the at least first RS resource occupies in a time domain the time-domain resource of the first time slot depends on at least one of a length of the first time-domain resource and a position of the first time slot in the first time-domain resource.

According to one aspect of the present application, the above method is characterized in that the first signaling configures the first time slot to each RS resource in the at least first RS resource.

According to one aspect of the present application, the above method is characterized in that the at least first RS resource comprises a plurality of RS resources, and the first time slot is not configured to at least one RS resource in the plurality of RS resources.

According to one aspect of the present application, the above method is characterized by comprising:

sending a first message, the first message being one RRC message, and the first message comprising a first time length and a first cycle length of first DTX,

wherein at least the first time length is used for determining an active time of the first DTX; at least the first cycle length is used for determining a duration of each DTX cycle of the first DTX; and the first time-domain resource belongs to an inactive time of the first DTX.

According to one aspect of the present application, the above method is characterized in that the second signaling is received after the first message is received; and the second signaling is a signaling of a protocol layer below an RRC sublayer.

According to one aspect of the present application, the above method is characterized in that only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

According to one aspect of the present application, the above method is characterized in that the first sub-time-domain resource depends on a target timer, and a moment when the target timer expires is used for determining a starting moment of the first sub-time-domain resource.

According to one aspect of the present application, the above method is characterized in that the first time-domain resource comprises at least one sub-time-domain resource, and each sub-time-domain resource in the at least one sub-time-domain resource is one subset of the first time-domain resource; only when the first time slot belongs to any one of the at least one sub-time-domain resource, the at least first RS resource occupies in the time domain the time-domain resource of the first time slot; and whether the at least first RS resource occupies in the time domain the time-domain resource of the first time slot depends on the position of the first time slot in the first time-domain resource.

The present application discloses a first node used for wireless communication, characterized by comprising:

a first receiver for receiving a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,
wherein whether the at least first RS resource occupies in a time domain the time-domain resource of the first time slot depends on at least one of a length of the first time-domain resource and a position of the first time slot in the first time-domain resource.

The present application discloses a second node used for wireless communication, characterized by comprising:

a second transmitter for sending a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,
wherein whether the at least first RS resource occupies in a time domain the time-domain resource of the first time slot depends on at least one of a length of the first time-domain resource and a position of the first time slot in the first time-domain resource.

As one embodiment, compared with the traditional solution, the present application has the following advantages:

- . Reduce the time slot occupied by at least the first RS resource in the first time-domain resource, and at the same time be able to obtain measurement information in a timely manner;
- . Help to save network energy; and
- . Help to save energy of a first node.

## Brief Description of the Drawings

Other features, purposes and advantages of the present application will become more apparent from reading the detailed description of the non-limiting embodiments made with reference to the following drawings:

FIG. 1 shows a flowchart of transmission of a first signaling and a second signaling according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;

FIG. 4 shows a schematic diagram of a first communication device and a second communication device according to one embodiment of the present application;

FIG. 5 shows a flowchart of radio signal transmission according to one embodiment of the present application;

FIG. 6 shows a flowchart of radio signal transmission according to another embodiment of the present application;

FIG. 7 shows a schematic diagram of a second signaling being received after a first message is received and the second signaling being a signaling of a protocol layer below an RRC sublayer according to one embodiment of the present application;

FIG. 8 shows a schematic diagram of a first signaling configuring a first time slot to each RS resource in at least a first RS resource according to one embodiment of the present application;

FIG. 9 shows a schematic diagram of at least a first RS resource comprising a plurality of RS resources and a first time slot not being configured to at least one RS resource in the plurality of RS resources according to one embodiment of the present application;

FIG. 10 shows a schematic diagram of whether at least a first RS resource occupies in a time domain a time-domain resource of a first time slot depending on a position of the first time slot in a first time-domain resource according to one embodiment of the present application;

FIG. 11 shows a schematic diagram of a first sub-time-domain resource depending on a target timer according to one embodiment of the present application;

FIG. 12 shows a schematic diagram of a first time-domain resource comprising at least one sub-time-domain resource according to one embodiment of the present application;

FIG. 13 shows a schematic diagram of a first time slot and a first time-domain resource according to one embodiment of the present application;

FIG. 14 shows a schematic diagram of a DTX cycle of first DTX according to one embodiment of the present application;

FIG. 15 shows a schematic diagram of a first sub-time-domain resource according to one embodiment of the present application;

FIG. 16 shows a schematic diagram of at least one sub-time-domain resource according to one embodiment of the present application;

FIG. 17 shows a structural block diagram of a processing apparatus used in a first node according to one embodiment of the present application; and

FIG. 18 shows a structural block diagram of a processing apparatus used in a second node according to one embodiment of the present application.

**Detailed Description of Embodiments**

The technical solution of the present application will be further described in detail below in conjunction with the accompanying drawings. It should be noted that, in the absence of conflict, embodiments and features in the embodiments in the present application may be arbitrarily combined with each other.

**Embodiment 1**

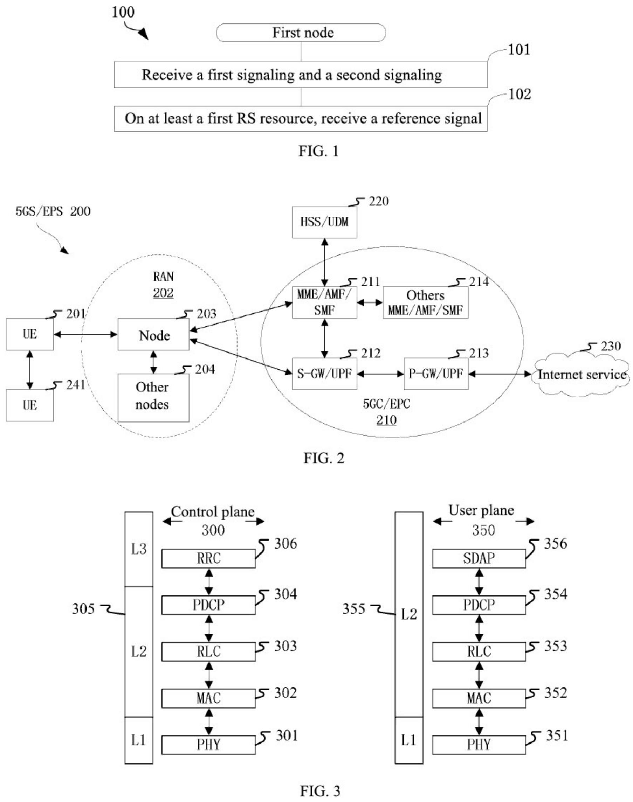

Embodiment 1 illustrates a flowchart of transmission of a first signaling and a second signaling according to one embodiment of the present application, as shown in FIG. 1. In FIG. 1, each block represents one step. It is particularly emphasized that the order of the blocks in the figure does not represent the temporal relationship between the steps represented.

In Embodiment 1, a first node in the present application receives the first signaling and the second signaling in step 101, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, in step 102, on the at least first RS resource, receives a reference signal, wherein whether the at least first RS resource occupies in a time domain the time-domain resource of the first time slot depends on at least one of a length of the first time-domain resource and a position of the first time slot in the first time-domain resource.

As one embodiment, the first signaling and the second signaling are received simultaneously.

As one embodiment, the first signaling is received before the second signaling.

As one embodiment, the first signaling is received after the second signaling.

As one embodiment, the present application does not limit the temporal relationship in which the first signaling and the second signaling are received.

As one embodiment, the first signaling is one dedicated signaling.

As one embodiment, the first signaling comprises at least a dedicated signaling.

As one embodiment, a signaling radio bearer of the first signaling is an SRB1 (Signaling Radio Bearer 1).

As one embodiment, the signaling radio bearer of the first signaling is an SRB3 (Signaling Radio Bearer 3).

As one embodiment, a logical channel used for bearing the first signaling is a DCCH (Dedicated Control Channel).

As one embodiment, a transport channel used for bearing the first signaling is a DL-SCH (Downlink Shared Channel).

As one embodiment, a physical layer channel used for bearing the first signaling is a PDSCH (Physical Downlink Shared Channel).

As one embodiment, the first signaling comprises at least one cell common signaling.

As one embodiment, the first signaling comprises at least one UE specific signaling.

As one embodiment, the first signaling is a cell common signaling.

As one embodiment, the first signaling is a UE specific signaling.

As one embodiment, the first signaling belongs to and comprises one RRC message.

As one embodiment, the first signaling belongs to at least one RRC message.

As one embodiment, the first signaling belongs to at least one RRC IE (Information Element).

As one embodiment, the first signaling belongs to at least one RRC domain.

As one embodiment, the first signaling belongs to at least one RRCReconfiguration message.

As one embodiment, the first signaling belongs to at least one RRCResume message.

As one embodiment, the first signaling belongs to at least one RRCReestablishment message.

As one embodiment, the first signaling belongs to at least one SIB1 message.

As one embodiment, the first signaling belongs to at least one SystemInformation message.

As one embodiment, the first signaling is used for determining one or more NZP-CSI-RS-ResourceSets.

As one embodiment, the first signaling is used for determining one or more CSI-IM-ResourceSets.

As one embodiment, the first signaling is used for determining one or more CSI-SSB-ResourceSets.

As one embodiment, the first signaling comprises at least one nzp-CSI-RS-ResourceSetList.

As one embodiment, the first signaling comprises at least one csi-SSB-ResourceSetList.

As one embodiment, the first signaling comprises at least one csi-IM-ResourceSetList.

As one embodiment, the first signaling comprises at least one CSI-MeasConfig IE.

As one embodiment, the first signaling comprises at least one CSI-ResourceConfig IE.

As one embodiment, the first signaling comprises at least one CSI-RS-ResourceMapping IE.

As one embodiment, the first signaling comprises at least one CSI-RS-ResourceMapping IE, and one CSI-RS-ResourceMapping IE in the at least one CSI-RS-ResourceMapping IE is used for configuring at least the former of the resource occupied by one RS resource in the at least first RS resource in the frequency domain and the time-domain resource occupied by the at least first RS resource on the physical resource block.

As one embodiment, the first signaling is used for configuring the number of ports occupied by the at least first RS resource.

As one embodiment, the first signaling comprises at least one nrofPorts field, and one nrofPorts field in the at least one nrofPorts field is used for configuring the number of ports occupied by one RS resource in the at least first RS resource.

As one embodiment, the first signaling comprises at least one frequencyDomainAllocation field, and one frequencyDomainAllocation field in the at least one frequencyDomainAllocation field is used for configuring the resource occupied by one RS resource in the at least first RS resource in the frequency domain.

As one embodiment, the first signaling comprises at least one freqBand field, and one freqBand field in the at least one freqBand field is used for configuring the resource occupied by one RS resource in the at least first RS resource in the frequency domain.

As one embodiment, the first signaling comprises at least one firstOFDMSymbolInTimeDomain field, and one firstOFDMSymbolInTimeDomain field in the at least one firstOFDMSymbolInTimeDomain field is used for configuring the time-domain resource occupied by one RS resource in the at least first RS resource on the physical resource block.

As one embodiment, the first signaling comprises at least one firstOFDMSymbolInTimeDomain2 field, and one firstOFDMSymbolInTimeDomain2 field in the at least one firstOFDMSymbolInTimeDomain2 field is used for configuring the time-domain resource occupied by one RS resource in the at least first RS resource on the physical resource block.

As one embodiment, the at least first RS resource is configured to a first cell.

As one embodiment, the at least first RS resource is configured to the same BWP of the first cell.

As one embodiment, the at least first RS resource is configured to an active BWP of the first cell.

As one embodiment, the at least first RS resource is configured to any BWP of the first cell.

As one embodiment, the first cell is one serving cell of the first node.

As one embodiment, the first cell is one PCell (Primary Cell) of the first node.

As one embodiment, the first cell is one PSCell (Primary SCG (Secondary Cell Group) Cell) of the first node.

As one embodiment, the first cell is one SCell (Secondary Cell) of the first node.

As one embodiment, the first cell is a resident cell of the first node.

As one embodiment, the first cell is configured to one serving cell of the first node.

As one embodiment, the phrase "a resource occupied by at least a first RS resource in a frequency domain" refers to: the resource respectively occupied by each RS resource in the at least first RS resource in the frequency domain.

As one embodiment, the phrase "a resource occupied by at least a first RS resource in a frequency domain" refers to: the resource occupied by any RS resource in the at least first RS resource in the frequency domain.

As one embodiment, the phrase "a time-domain resource occupied by the at least first RS resource on a physical resource block" refers to: the time-domain resource respectively occupied by each RS resource in the at least first RS resource on the physical resource block.

As one embodiment, the phrase "a time-domain resource occupied by the at least first RS resource on a physical resource block" refers to: the time-domain resource occupied by any RS resource in the at least first RS resource on the physical resource block.

As one embodiment, the phrase "a time-domain resource occupied by one RS resource on a physical resource block" refers to: a symbol occupied by the one RS resource on the physical resource block.

As one embodiment, the phrase "a time-domain resource occupied by one RS resource on a physical resource block" refers to: an OFDM (Orthogonal Frequency Division Multiplexing) symbol occupied by the one RS resource on the physical resource block.

As one embodiment, the phrase "at least the former of a resource occupied by at least a first RS resource in a frequency domain and a time-domain resource occupied by the at least first RS resource on a physical resource block" refers to: the resource occupied by the at least first RS resource in the frequency domain.

As one embodiment, the phrase "at least the former of a resource occupied by at least a first RS resource in a frequency domain and a time-domain resource occupied by the at least first RS resource on a physical resource block" refers to: the resource occupied by the at least first RS resource in the frequency domain and the time-domain resource occupied by the at least first RS resource on the physical resource block.

As one embodiment, the at least first RS resource is one RS resource.

As one embodiment, the at least first RS resource is a plurality of RS resources, and the first RS resource is any RS resource in the plurality of RS resources.

As one embodiment, the at least first RS resource is a plurality of RS resources, and the first RS resource is one RS resource in the plurality of RS resources.

As one embodiment, each RS resource in the at least first RS resource is used for measurement.

As one embodiment, each RS resource in the at least first RS resource is used for channel measurement.

As one embodiment, at least one RS resource in the at least first RS resource is not used for channel measurement.

As one embodiment, each RS resource in the at least first RS resource is used for interference measurement.

As one embodiment, at least one RS resource in the at least first RS resource is not used for interference measurement.

As one embodiment, each RS resource in the at least first RS resource is used for one of channel measurement or interference measurement.

As one embodiment, each RS resource in the at least first RS resource is an aperiodic RS resource.

As one embodiment, at least one RS resource in the at least first RS resource is not the aperiodic RS resource.

As one embodiment, each RS resource in the at least first RS resource is a periodic RS resource.

As one embodiment, at least one RS resource in the at least first RS resource is not the periodic RS resource.

As one embodiment, each RS resource in the at least first RS resource is a semi-persistent RS resource.

As one embodiment, at least one RS resource in the at least first RS resource is not the semi-persistent RS resource.

As one embodiment, each RS resource in the at least first RS resource is one of the periodic RS resource or the semi-persistent RS resource.

As one embodiment, the at least first RS resource is configured to the first cell, and each RS resource in the first RS resource is the periodic RS resource.

As one embodiment, the at least first RS resource is configured to the same BWP of the first cell, and each RS resource in the first RS resource is the periodic RS resource.

As one embodiment, the at least first RS resource is configured to the active BWP of the first cell, and each RS resource in the first RS resource is the periodic RS resource.

As one embodiment, the at least first RS resource is configured to any BWP of the first cell, and each RS resource in the first RS resource is the periodic RS resource.

As one embodiment, the at least first RS resource is configured to the first cell, and each RS resource in the first RS resource is one of the periodic RS resource or the semi-persistent RS resource.

As one embodiment, the at least first RS resource is configured to the same BWP of the first cell, and each RS resource in the first RS resource is one of the periodic RS resource or the semi-persistent RS resource.

As one embodiment, the at least first RS resource is configured to the active BWP of the first cell, and each RS resource in the first RS resource is one of the periodic RS resource or the semi-persistent RS resource.

As one embodiment, the at least first RS resource is configured to any BWP of the first cell, and each RS resource in the first RS resource is one of the periodic RS resource or the semi-persistent RS resource.

As one embodiment, the at least first RS resource comprises all RS resources configured to the first cell.

As one embodiment, the at least first RS resource comprises all RS resources configured to only the active BWP of the first cell.

As one embodiment, the at least first RS resource comprises all RS resources configured to any BWP of the first cell.

As one embodiment, the at least first RS resource comprises all periodic RS resources configured to the first cell.

As one embodiment, the at least first RS resource comprises all semi-persistent RS resources configured to the first cell.

As one embodiment, the at least first RS resource comprises all periodic RS resources and semi-persistent RS resources configured to the first cell.

As one embodiment, the at least first RS resource comprises all periodic RS resources configured to only the active BWP or any BWP of the first cell.

As one embodiment, the at least first RS resource comprises all semi-persistent RS resources configured to only the active BWP or any BWP of the first cell.

As one embodiment, the at least first RS resource comprises all periodic RS resources and semi-persistent RS resources configured to only the active BWP or any BWP of the first cell.

As one embodiment, the at least first RS resource comprises all periodic CSI-RS resources configured to only the active BWP or any BWP of the first cell.

As one embodiment, the at least first RS resource comprises all semi-persistent CSI-RS resources configured to only the active BWP or any BWP of the first cell.

As one embodiment, the at least first RS resource comprises all periodic CSI-RS resources and semi-persistent CSI-RS resources configured to only the active BWP or any BWP of the first cell.

As one embodiment, if a type of one RS resource is configured as semiPersistent, the one RS resource is the semi-persistent RS resource.

As one embodiment, if the type of one RS resource is configured as periodic, the one RS resource is the periodic RS resource.

As one embodiment, if the type of one RS resource is configured as aperiodic, the one RS resource is the aperiodic RS resource.

As one embodiment, the type of one RS resource is configured by one resourceType field to the one RS resource.

As one embodiment, each RS resource in the at least first RS resource is configured with one identifier.

As one embodiment, each RS resource in the at least first RS resource is configured with one CSI-Resource-ConfigId.

As one embodiment, each RS resource in the at least first RS resource is configured with one ZP-CSI-RS-ResourceId.

As one embodiment, each RS resource in the at least first RS resource is configured with one NZP-CSI-RS-ResourceId.

As one embodiment, each RS resource in the at least first RS resource is configured with one CSI-IM-Resource.

As one embodiment, each RS resource in the at least first RS resource is configured with one of one ZP-CSI-RS-ResourceId or one NZP-CSI-RS-ResourceId or one CSI-IM-Resource.

As one embodiment, each RS resource in the at least first RS resource is one CRS (Cell Reference Signal).

As one embodiment, each RS resource in the at least first RS resource is one SSB.

As one embodiment, each RS resource in the at least first RS resource is one CSI-RS resource.

As one embodiment, each RS resource in the at least first RS resource is one CSI-RS resource or one SSB.

As one embodiment, each RS resource in the at least first RS resource is one NZP (Non-Zero-Power) CSI-RS resource.

As one embodiment, at least one RS resource in the at least first RS resource is not the NZP CSI-RS resource.

As one embodiment, each RS resource in the at least first RS resource is one ZP (Zero-Power) CSI-RS resource.

As one embodiment, at least one RS resource in the at least first RS resource is not the ZP CSI-RS resource.

As one embodiment, each RS resource in the at least first RS resource is one of the NZP CSI-RS resource or the ZP CSI-RS resource.

As one embodiment, each RS resource in the at least first RS resource is one CSI interference management (IM) resource.

As one embodiment, at least one RS resource in the at least first RS resource is not one CSI interference management (IM) resource.

As one embodiment, each RS resource in the at least first RS resource is one of the NZP CSI-RS resource or the ZP CSI-RS resource or the CSI interference management resource.

As one embodiment, the second signaling comprises at least one cell common signaling.

As one embodiment, the second signaling comprises at least one UE specific signaling.

As one embodiment, the second signaling is one cell common signaling.

As one embodiment, the second signaling is one UE specific signaling.

As one embodiment, the second signaling comprises the RRC message.

As one sub-embodiment of this embodiment, the second signaling comprises the RRC message and an MAC CE.

As one sub-embodiment of this embodiment, the second signaling comprises the RRC message and DCI.

As one sub-embodiment of this embodiment, the second signaling is one RRC message.

As one sub-embodiment of this embodiment, the signaling radio bearer of the second signaling is the SRB1.

As one sub-embodiment of this embodiment, the signaling radio bearer of the second signaling is the SRB3.

As one sub-embodiment of this embodiment, the logical channel used for bearing the first signaling is the DCCH.

As one sub-embodiment of this embodiment, the logical channel used for bearing the first signaling is a BCCH (Broadcast Control Channel).

As one sub-embodiment of this embodiment, the transport channel used for bearing the first signaling is the DL-SCH.

As one sub-embodiment of this embodiment, the physical layer channel used for bearing the first signaling is the PDSCH.

As one sub-embodiment of this embodiment, the second signaling comprises the SIB1 message.

As one sub-embodiment of this embodiment, the second signaling comprises the SystemInformation message.

As one sub-embodiment of this embodiment, the second signaling comprises one System Information Block.

As one embodiment, the second signaling is one MAC (Medium Access Control) CE (Control Element).

As one sub-embodiment of this embodiment, the second signaling is used for activating first DTX.

As one sub-embodiment of this embodiment, the second signaling is used for activating DTX of the first cell.

As one sub-embodiment of this embodiment, the second signaling is used for activating one DTX configuration of the first DTX in a plurality of DTX configurations.

As one embodiment, the second signaling is one piece of DCI (Downlink Control Information).

As one sub-embodiment of this embodiment, the second signaling is used for activating the first DTX.

As one sub-embodiment of this embodiment, the second signaling is used for activating the DTX of the first cell.

As one sub-embodiment of this embodiment, the second signaling is used for activating one DTX configuration of the first DTX in the plurality of DTX configurations.

As one embodiment, the meaning of a phrase "the second signaling being used for determining a first time-domain resource" is: at least the second signaling is used for determining the first time-domain resource.

As one embodiment, the meaning of the phrase "the second signaling being used for determining a first time-domain resource" is: the second signaling explicitly indicates the first time-domain resource.

As one embodiment, the meaning of the phrase "the second signaling being used for determining a first time-domain resource" is: the second signaling implicitly indicates the first time-domain resource.

As one embodiment, the meaning of the phrase "the second signaling being used for determining a first time-domain resource" is: parameters of the second signaling are used for determining the first time-domain resource.

As one embodiment, the meaning of the phrase "the second signaling being used for determining a first time-domain resource" is: the second signaling is used for determining at least one of a starting moment or a cut-off moment of the first time-domain resource.

As one embodiment, the meaning of the phrase "the second signaling being used for determining a first time-domain resource" is: the second signaling is used for determining at least one of the length or the position of the first time-domain resource.

As one embodiment, the second signaling is used for determining that the first time-domain resource is an inactive time of the first DTX.

As one embodiment, the second signaling is used for determining that the first time-domain resource is the inactive time within one DTX cycle of the first DTX.

As one embodiment, the second signaling is used for indicating DTX of the first cell on the first time-domain resource.

As one embodiment, the second signaling is used for indicating that the first node does not monitor a PDCCH on the first cell on the first time-domain resource.

As one embodiment, the second signaling is used for indicating that the first node does not receive downlink transmission on the first cell on the first time-domain resource, and the first RS resource is configured to the first cell; and the downlink transmission comprises DCI identified by a C-RNTI (Cell Radio Network Temporary Identifier).

As one embodiment, the downlink transmission comprises DCI in a UE-specific search space (USS).

As one embodiment, the first node does not monitor the PDCCH on the first cell on the first time-domain resource.

As one embodiment, the first node does not receive the PDCCH on the first cell on the first time-domain resource.

As one embodiment, the first node does not receive the DL-SCH on the first cell on the first time-domain resource.

As one embodiment, the first node does not receive the PDCCH used for scheduling the PDSCH on the first time-domain resource.

As one embodiment, the first node considers that the PDCCH on the first cell is not sent on the first time-domain resource.

As one embodiment, the first node considers that the DL-SCH on the first cell is not sent on the first time-domain resource.

As one embodiment, the first node considers that the PDCCH used for scheduling the PDSCH is not sent on the first time-domain resource.

As one embodiment, the first time-domain resource is one time window.

As one embodiment, the first time-domain resource is continuous in the time domain.

As one embodiment, the first time-domain resource is not continuous in the time domain.

As one embodiment, the first time-domain resource comprises at least 1 second.

As one embodiment, the first time-domain resource comprises a plurality of 1 second.

As one embodiment, the first time-domain resource comprises at least 1 millisecond.

As one embodiment, the first time-domain resource comprises a plurality of 1 millisecond.

As one embodiment, the first time-domain resource comprises at least 10 milliseconds.

As one embodiment, the first time-domain resource comprises at least 1 submillisecond.

As one embodiment, the first time-domain resource comprises a plurality of submilliseconds.

As one embodiment, the first time-domain resource comprises at least one OFDM symbol.

As one embodiment, the first time-domain resource comprises a plurality of OFDM symbols.

As one embodiment, the first time-domain resource comprises at least one time slot.

As one embodiment, the first time-domain resource comprises a plurality of time slots.

As one embodiment, the first time-domain resource comprises one occurrence of periodic DTX.

As one embodiment, the length of the first time-domain resource refers to the length of a time interval occupied by the first time-domain resource.

As one embodiment, the length of the first time-domain resource is variable.

As one embodiment, the length of the first time-domain resource is fixed.

As one embodiment, the length of the first time-domain resource is configurable.

As one embodiment, the length of the first time-domain resource is pre-configured.

As one embodiment, the length of the first time-domain resource is not greater than one threshold.

As one embodiment, the length of the first time-domain resource is not greater than a first cycle length in the present application.

As one embodiment, the first time-domain resource depends on at least one timer.

As one embodiment, the first time-domain resource depends on at least a first timer in the present application.

As one embodiment, the first time-domain resource does not depend on the first timer in the present application.

As one embodiment, the first time-domain resource depends on at least one downlink signaling or uplink signaling.

As one embodiment, the first time-domain resource does not depend on the downlink signaling or uplink signaling.

As one embodiment, the first time-domain resource depends on the inactive time of the first DTX.

As one embodiment, the first time-domain resource comprises the inactive time of the first DTX.

As one embodiment, the first time-domain resource is the inactive time of the first DTX.

As one embodiment, the first time-domain resource comprises a time during which a base station of the first cell is maintained in a network energy-saving state.

As one embodiment, the first time slot is configured to only the first RS resource.

As one embodiment, the first time slot is configured to a plurality of RS resources, and the first RS resource is one RS resource in the plurality of RS resources.

As one embodiment, the first time slot is configured to any RS resource in the at least first RS resource.

As one embodiment, the first time slot belongs to the first time-domain resource.

As one embodiment, the first time slot is one time slot in the first time-domain resource.

As one embodiment, the first time slot is any time slot in the first time-domain resource.

As one embodiment, the first time slot belongs to the first time-domain resource in the time domain.

As one embodiment, the starting moment of the first time slot is not earlier than that of the first time-domain resource, and the cut-off moment of the first time slot is not later than that of the first time-domain resource.

As one embodiment, the position of the first time slot in the first time-domain resource does not depend on at least one of a first $T_{offset}$ and a first $T_{CSI-RS}$.

As one embodiment, the position of the first time slot in the first time-domain resource depends on at least one of the first $T_{offset}$ and the first $T_{CSI-RS}$.

As one embodiment, the first DTX is one piece of DTX.

As one embodiment, the first DTX comprises an active time of a cell and the inactive time of the cell.

As one embodiment, the first DTX is one piece of long DTX.

As one embodiment, the first DTX is one piece of short DTX.

As one embodiment, the first DTX is one piece of cell DTX.

As one embodiment, the first DTX is one piece of DTX dedicated to one cell.

As one embodiment, the first DTX is one DTX operation.

As one embodiment, the first DTX is DTX using one DTX configuration parameter.

As one embodiment, the first DTX is one DTX group.

As one sub-embodiment of this embodiment, the one DTX group consists of at least one cell.

As one sub-embodiment of this embodiment, the one DTX group consists of at least one TRP.

As one sub-embodiment of this embodiment, the one DTX group consists of at least one CSS (Common Search Space).

As one sub-embodiment of this embodiment, the one DTX group consists of at least one BWP.

As one embodiment, the first DTX is one piece of DTX of the first cell.

As one embodiment, the first DTX refers to DTX of the first cell.

As one embodiment, the inactive time of the first DTX refers to a time other than the active time of the first DTX.

As one embodiment, the inactive time of the first DTX comprises the time other than the active time of the first DTX.

As one embodiment, the inactive time of the first DTX and the active time of the first DTX are orthogonal in the time domain.

As one embodiment, within one cycle of the first DTX, the sum of the inactive time of the first DTX and the active time of the first DTX is equal to the first cycle length in the present application.

As one embodiment, the first cell is configured with at least the first DTX.

As one embodiment, the first cell is configured with only the first DTX.

As one embodiment, the first cell is configured with a plurality of DTX, and the first DTX is one piece of DTX in the plurality of DTX.

As one embodiment, the first cell is configured with the plurality of DTX, and the first DTX is any DTX in the plurality of DTX.

As one embodiment, the at least first RS resource is associated with the first DTX.

As one embodiment, the meaning of a behavior of receiving the reference signal on the at least first RS resource refers to: receiving the reference signal on at least one RS resource in the at least first RS resource.

As one embodiment, the meaning of the behavior of receiving the reference signal on the at least first RS resource refers to: receiving the reference signal on an RS resource in the at least first RS resource that occupies the first time slot in the time domain.

As one embodiment, the meaning of the behavior of receiving the reference signal on the at least first RS resource refers to: receiving the reference signal on each RS resource in the at least first RS resource.

As one embodiment, the meaning of the behavior of receiving the reference signal on the at least first RS resource refers to: receiving the reference signal respectively on the at least first RS resource.

As one embodiment, the meaning of receiving the reference signal on one RS resource comprises: receiving the reference signal according to a power control parameter configured to the one RS resource.

As one embodiment, the power control parameter of one RS resource is indicated by at least one power-ControlOffset field.

As one embodiment, the power control parameter of one RS resource is indicated by at least one power-ControlOffsetSS field.

As one embodiment, the meaning of receiving the reference signal on one RS resource comprises: receiving the reference signal according to a scrambling parameter configured to the one RS resource.

As one embodiment, the scrambling parameter of one RS resource is indicated by at least one scramblingID field.

As one embodiment, the meaning of receiving the reference signal on one RS resource comprises: receiving the reference signal according to a QCL (Quasi co-location) parameter configured to the one RS resource.

As one embodiment, the QCL parameter of one RS resource is indicated by at least one qcl-InfoPeriodicCSI-RS field.

As one embodiment, the time-domain resource of the first time slot refers to the first time slot.

As one embodiment, the time-domain resource of the first time slot refers to the position and length of the first time slot in the time domain.

As one embodiment, the time-domain resource of the first time slot comprises a time slot number of the first time slot.

As one embodiment, the time-domain resource of the first time slot comprises at least one symbol in the first time slot.

As one embodiment, the time-domain resource of the first time slot refers to one symbol in the first time slot.

As one embodiment, the time-domain resource of the first time slot refers to a plurality of symbols in the first time slot.

As one embodiment, the meaning of a phrase "whether the at least first RS resource occupies in a time domain the time-domain resource of the first time slot depends on at least one of a length of the first time-domain resource and a position of the first time slot in the first time-domain resource" refers to: whether the at least first RS resource occupies in the time domain the time-domain resource of the first time slot is related to at least one of the length of the first time-domain resource and the position of the first time slot in the first time-domain resource.

As one embodiment, the meaning of the phrase "whether the at least first RS resource occupies in a time domain the time-domain resource of the first time slot depends on at least one of a length of the first time-domain resource and a position of the first time slot in the first time-domain resource" refers to: whether the at least first RS resource occupies in the time domain the time-domain resource of the first time slot depends on the length of the first time-domain resource.

As one embodiment, the meaning of the phrase "whether the at least first RS resource occupies in a time domain the time-domain resource of the first time slot depends on at least one of a length of the first time-domain resource and a position of the first time slot in the first time-domain resource" refers to: whether the at least first RS resource occupies in the time domain the time-domain resource of the first time slot depends on the position of the first time slot in the first time-domain resource.

As one embodiment, the meaning of the phrase "whether the at least first RS resource occupies in a time domain the time-domain resource of the first time slot depends on at least one of a length of the first time-domain resource and a position of the first time slot in the first time-domain resource" refers to: whether the at least first RS resource occupies in the time domain the time-domain resource of the first time slot depends on the length of the first time-domain resource and the position of the first time slot in the first time-domain resource.

As one embodiment, the meaning of the phrase "whether the at least first RS resource occupies in a time domain the time-domain resource of the first time slot depends on at least one of a length of the first time-domain resource and a position of the first time slot in the first time-domain resource" refers to: whether any RS resource in the at least first RS resource occupies in the time domain the time-domain resource of the first time slot depends on at least one of the length of the first time-domain resource and the position of the first time slot in the first time-domain resource.

As one embodiment, the meaning of the phrase "whether the at least first RS resource occupies in a time domain the time-domain resource of the first time slot depends on at least one of a length of the first time-domain resource and a position of the first time slot in the first time-domain resource" comprises: whether the first RS resource occupies in the time domain the time-domain resource of the first time slot depends on at least one of the length of the first time-domain resource and the position of the first time slot in the first time-domain resource.

As one embodiment, the meaning of a phrase "whether the at least first RS resource occupies in a time domain the time-domain resource of the first time slot" refers to: whether each RS resource in the at least first RS resource occupies in the time domain the time-domain resource of the first time slot.

As one embodiment, the meaning of the phrase "whether the at least first RS resource occupies in a time domain the time-domain resource of the first time slot" refers to: whether at least one RS resource in the at least first RS resource occupies in the time domain the time-domain resource of the first time slot.

As one embodiment, the meaning of "whether one RS resource occupies in the time domain the time-domain resource of the first time slot" refers to: whether the first time slot is used for sending the reference signal on the one RS resource.

As one sub-embodiment of this embodiment, the meaning of "one RS resource occupies in the time domain the time-domain resource of the first time slot" comprises: the first time slot is used for sending the reference signal on the one RS resource.

As one sub-embodiment of this embodiment, the meaning of "one RS resource does not occupy in the time domain the time-domain resource of the first time slot" comprises: the first time slot is not used for sending the reference signal on the one RS resource.

As one embodiment, the meaning of "whether one RS resource occupies in the time domain the time-domain resource of the first time slot" refers to: for the one RS resource, whether the reference signal is sent in the first time slot.

As one sub-embodiment of this embodiment, the meaning of "one RS resource occupies in the time domain the time-domain resource of the first time slot" comprises: for the one RS resource, the reference signal is sent in the first time slot.

As one sub-embodiment of this embodiment, the meaning of "one RS resource does not occupy in the time domain the time-domain resource of the first time slot" comprises: for the one RS resource, the reference signal is not sent in the first time slot.

As one embodiment, the meaning of "whether one RS resource occupies in the time domain the time-domain resource of the first time slot" refers to: for the one RS resource, whether the reference signal is sent in the first time slot.

As one sub-embodiment of this embodiment, the meaning of "one RS resource occupies in the time domain the time-domain resource of the first time slot" comprises: for the one RS resource, the reference signal is sent in the first time slot.

As one sub-embodiment of this embodiment, the meaning of "one RS resource does not occupy in the time domain the time-domain resource of the first time slot" comprises: for the one RS resource, the reference signal is not sent in the first time slot.

As one embodiment, the meaning of "whether one RS resource occupies in the time domain the time-domain resource of the first time slot" refers to: for the one RS resource, whether the first node should assume that the reference signal is sent in the first time slot.

As one sub-embodiment of this embodiment, the meaning of "one RS resource occupies in the time domain the time-domain resource of the first time slot" comprises: for the one RS resource, the first node should assume that the reference signal is sent in the first time slot.

As one sub-embodiment of this embodiment, the meaning of "one RS resource does not occupy in the time domain the time-domain resource of the first time slot" comprises: for the one RS resource, the first node should not assume that the reference signal is sent in the first time slot.

As one embodiment, the meaning of "whether one RS resource occupies in the time domain the time-domain resource of the first time slot" refers to: whether the first time slot is used for receiving the reference signal on the one RS resource.

As one sub-embodiment of this embodiment, the meaning of "one RS resource occupies in the time domain the time-domain resource of the first time slot" comprises: the first time slot is used for receiving the reference signal on the one RS resource.

As one sub-embodiment of this embodiment, the meaning of "one RS resource does not occupy in the time domain the time-domain resource of the first time slot" comprises: the first time slot is not used for receiving the reference signal on the one RS resource.

As one embodiment, if the length of the first time-domain resource is less than or not greater than one threshold, the at least first RS resource does not occupy in the time domain the time-domain resource of the first time slot; and if the length of the first time-domain resource is not less than or greater than one threshold, the at least first RS resource occupies in the time domain the time-domain resource of the first time slot.

As one embodiment, if the length of the first time-domain resource is less than or not greater than one threshold, the at least first RS resource does not occupy in the time domain the time-domain resource of the first time slot; and if the length of the first time-domain resource is not less than or greater than one threshold, whether the at least first RS resource occupies in the time domain the time-domain resource of the first time slot depends on the position of the first time slot in the first time-domain resource.

As one embodiment, the above one threshold is configurable.

As one embodiment, the above one threshold is pre-configured.

As one embodiment, the above one threshold is pre-defined.

As one embodiment, the above one threshold is determined by UE.

As one embodiment, the meaning of "the position of the first time slot in the first time-domain resource" comprises: whether the first time slot belongs to one sub-time-domain resource in the first time-domain resource.

As one embodiment, if the first time slot belongs to one sub-time-domain resource in the first time-domain resource, the at least first RS resource occupies in the time domain the time-domain resource of the first time slot; and if the first time slot does not belong to any sub-time-domain resource in the first time-domain resource, the at least first RS resource does not occupy in the time domain the time-domain resource of the first time slot.

As one embodiment, one sub-time-domain resource is a continuous time-domain resource in the first time-domain resource.

As one embodiment, the first time-domain resource comprises at least one sub-time-domain resource.

As one embodiment, the first time-domain resource comprises only one sub-time-domain resource.

As one embodiment, the first time-domain resource comprises one or more sub-time-domain resources.

As one embodiment, a position of one sub-time-domain resource in the first time-domain resource is configurable.

As one embodiment, the position of one sub-time-domain resource in the first time-domain resource is pre-configured.

As one embodiment, the position of one sub-time-domain resource in the first time-domain resource is pre-defined.

As one embodiment, a length of one sub-time-domain resource is configurable.

As one embodiment, the length of one sub-time-domain resource is pre-configured.

As one embodiment, the length of one sub-time-domain resource is pre-defined.

As one embodiment, the first RS resource is configured with the first $T_{offset}$ and the first $T_{CSI-RS}$.

As one sub-embodiment of this embodiment, the first $T_{CSI-RS}$ is a periodicity of the first RS resource.

As one sub-embodiment of this embodiment, the first $T_{CSI-RS}$ is a periodicity of the first RS resource configured to the active time of the first DTX.

As one sub-embodiment of this embodiment, the first $T_{CSI-RS}$ is a periodicity of the first RS resource configured to the time interval other than DTX.

As one sub-embodiment of this embodiment, the first $T_{CSI-RS}$ is a periodicity of the first RS resource for the active time of the first DTX.

As one sub-embodiment of this embodiment, the first $T_{CSI-RS}$ is a periodicity of the first RS resource for the first time-domain resource.

As one sub-embodiment of this embodiment, the first $T_{CSI-RS}$ is one $T_{CSI-RS}$.

As one sub-embodiment of this embodiment, the first $T_{offset}$ is a time slot offset of the first RS resource.

As one sub-embodiment of this embodiment, the first $T_{offset}$ is the time slot offset of the periodicity of the first RS resource.

As one sub-embodiment of this embodiment, the first $T_{offset}$ is configured to the first $T_{CSI-RS}$.

As one embodiment, the first $T_{offset}$ and the first $T_{CSI-RS}$ are indicated by one CSI-ResourcePeriodicityAndOffset.

As one embodiment, the first $T_{offset}$ and the first $T_{CSI-RS}$ are indicated by one CSI-ResourcePeriodicityAndOffset-r17.

As one embodiment, the first $T_{offset}$ and the first $T_{CSI-RS}$ are indicated by one domain comprising a CSI-ResourcePeriodicityAndOffset in its name.

As one sub-embodiment of this embodiment, within at least one time-domain resource other than the first time-domain resource, whether the first RS resource occupies in the time domain the time-domain resource of a second time slot depends on a value of ( first $N_{slot}^{frame,\mu}$ second $n_f$ + second $n_{s,f}^{\mu}$ − first $T_{offset}$ ) mod first $T_{CSI-RS}$ ; the second $n_{s,f}^{\mu}$ indicates the second time slot, and the second $n_f$ indicates a system frame to which the second time slot belongs; at least one time-domain resource other than the first time-domain resource comprises the second time slot; and $\mu$ in the first $N_{slot}^{frame,\mu}$ is configured to the BWP to which the first RS resource belongs.

As one sub-embodiment of this embodiment, the meaning of "whether the first RS resource occupies in the time domain the time-domain resource of a second time slot depends on a value of ( first $N_{slot}^{frame,\mu}$ second $n_f$ + second $n_{s,f}^{\mu}$ − first $T_{offset}$ ) mod first $T_{CSI-RS}$ " comprises: if ( first $N_{slot}^{frame,\mu}$ second $n_f$ + second $n_{s,f}^{\mu}$ − first $T_{offset}$ ) mod first $T_{CSI-RS}$ is equal to 0, the first RS resource occupies in the time domain the time-domain resource of the second time slot; and If ( first $N_{slot}^{frame,\mu}$ second $n_f$ + second $n_{s,f}^{\mu}$ − first $T_{offset}$ ) mod first $T_{CSI-RS}$ is not equal to 0, the first RS resource does not occupy in the time domain the time-domain resource of the second time slot.

As one sub-embodiment of this embodiment, within at least one time-domain resource other than the first time-domain resource, the first RS resource occupies in the time domain the time-domain resource of a time slot of ( first $N_{slot}^{frame,\mu} n_f + n_{s,f}^{\mu}$ − first $T_{offset}$ ) mod first $T_{CSI-RS}$ is equal to 0.

As one sub-embodiment of this embodiment, the first $N_{slot}^{frame,\mu}$ is the number of time slots per frame $\mu$ for a subcarrier spacing configuration $\mu$.

As one sub-embodiment of this embodiment, the above subcarrier spacing configuration $\mu$ is configured to the BWP to which the first RS resource belongs.

As one sub-embodiment of this embodiment, the second $n_f$ is one system frame number (SFN).

As one sub-embodiment of this embodiment, the second $n_f$ is the system frame number to which the second time slot belongs.

As one sub-embodiment of this embodiment, the second $n_{s,f}^{\mu}$ is the time slot number within one frame $\mu$ for the

subcarrier spacing configuration$\mu$.

As one sub-embodiment of this embodiment, the second $n_{s,f}^{\mu}$ is the time slot number of the second time slot.

As one sub-embodiment of this embodiment, the second $n_{s,f}^{\mu}$ is the time slot number of the second time slot within the one frame for the above subcarrier spacing configuration$\mu$.

As one sub-embodiment of this embodiment, the at least one time-domain resource other than the first time-domain resource is orthogonal to a first time interval in the time domain.

As one sub-embodiment of this embodiment, the at least one time-domain resource other than the first time-domain resource comprises the active time of the first DTX.

As one sub-embodiment of this embodiment, the at least one time-domain resource other than the first time-domain resource comprises the active time in the DTX cycle to which the first time interval of the first DTX belongs.

As one sub-embodiment of this embodiment, the at least one time-domain resource other than the first time-domain resource comprises the time interval before the first DTX is started.

As one sub-embodiment of this embodiment, the at least one time-domain resource other than the first time-domain resource is the active time of the first DTX.

As one sub-embodiment of this embodiment, the at least one time-domain resource other than the first time-domain resource is the active time in the DTX cycle to which the first time interval of the first DTX belongs.

As one sub-embodiment of this embodiment, the at least one time-domain resource other than the first time-domain resource is the time interval before the first DTX is started.

As one embodiment, the first RS resource is configured with the first $T_{offset}$, the first $T_{CSI-RS}$, a second $T_{offset}$, and a second $T_{CSI-RS}$.

As one sub-embodiment of this embodiment, the second $T_{CSI-RS}$ is the periodicity of the first RS resource configured to the first DTX.

As one sub-embodiment of this embodiment, the second $T_{CSI-RS}$ is the periodicity of the first RS resource configured to the inactive time of the first DTX.

As one sub-embodiment of this embodiment, the second $T_{CSI-RS}$ is one periodicity of the first RS resource for at least one time-domain resource other than the first time-domain resource.

As one sub-embodiment of this embodiment, the second $T_{CSI-RS}$ is one $T_{CSI-RS}$.

As one sub-embodiment of this embodiment, the second $T_{offset}$ is the time slot offset of the first RS resource.

As one sub-embodiment of this embodiment, the second $T_{offset}$ is the time slot offset of the periodicity of the first RS resource.

As one sub-embodiment of this embodiment, the second $T_{offset}$ is configured to the second $T_{CSI-RS}$.

As one sub-embodiment of this embodiment, an RRC signaling is used for configuring the second $T_{offset}$.

As one sub-embodiment of this embodiment, the first signaling is used for configuring the first $T_{offset}$.

As one sub-embodiment of this embodiment, the second $T_{offset}$ is the first $T_{offset}$.

As one sub-embodiment of this embodiment, the second $T_{offset}$ is not the first $T_{offset}$.

As one sub-embodiment of this embodiment, the second $T_{CSI-RS}$ is not the first $T_{CSI-RS}$.

As one sub-embodiment of this embodiment, the second $T_{CSI-RS}$ and the first $T_{CSI-RS}$ are configured by different RRC domains.

As one sub-embodiment of this embodiment, the RRC signaling is used for configuring the second $T_{CSI-RS}$.

As one sub-embodiment of this embodiment, the first signaling is used for configuring the second $T_{CSI-RS}$.

As one sub-embodiment of this embodiment, the second $T_{CSI-RS}$ is N1 times of the first $T_{CSI-RS}$.

As one sub-embodiment of this embodiment, the RRC signaling is used for configuring N1.

As one sub-embodiment of this embodiment, the first signaling is used for configuring N1.

As one sub-embodiment of this embodiment, N1 is pre-defined.

As one sub-embodiment of this embodiment, N1 is a positive integer.

As one sub-embodiment of this embodiment, N1 is a positive number.

As one sub-embodiment of this embodiment, candidates for N1 are not less than 1.

As one sub-embodiment of this embodiment, the candidates for N1 are greater than 1.

As one sub-embodiment of this embodiment, the candidates for N1 comprise 2.

As one sub-embodiment of this embodiment, the candidates for N1 comprise 1.5.

As one sub-embodiment of this embodiment, the meaning of "the position of the first time slot in the first time-domain resource" comprises: the value of ($\text{first } N_{slot}^{frame,\mu} \text{first } n_f + \text{first } n_{s,f}^{\mu} - \text{second } T_{offset}$) mod second $T_{CSI-RS}$; the first $n_{s,f}^{\mu}$ indicates the first time slot, the first $n_f$ indicates the system frame to which the first time slot belongs.

As one sub-embodiment of this embodiment, the meaning of "whether the first RS resource occupies in the time domain the time-domain resource of the first time slot depends on the value of ( $\text{first } N_{\text{slot}}^{\text{frame},\mu} \text{first } n_f + \text{first } n_{s,f}^{\mu} - \text{second } T_{\text{offset}}$ ) mod second $T_{\text{CSI-RS}}$" comprises: if ( $\text{first } N_{\text{slot}}^{\text{frame},\mu} \text{first } n_f + \text{first } n_{s,f}^{\mu} - \text{second } T_{\text{offset}}$ ) mod second $T_{\text{CSI-RS}}$ is equal to 0, the first RS resource occupies in the time domain the time-domain resource of the first time slot; and if ( $\text{first } N_{\text{slot}}^{\text{frame},\mu} n_f + \text{first } n_{s,f}^{\mu} - \text{second } T_{\text{offset}}$ ) mod second $T_{\text{CSI-RS}}$ is not equal to 0, the first RS resource does not occupy the time-domain resource of the first time slot in the time domain; and the first RS resource is configured with the second $T_{\text{offset}}$ and the second $T_{\text{CSI-RS}}$.

As one sub-embodiment of this embodiment, the first $n_f$ is one system frame number (SFN).

As one sub-embodiment of this embodiment, the first $n_f$ is the system frame number (SFN) to which the first time slot belongs.

As one sub-embodiment of this embodiment, the first $n_{s,f}^{\mu}$ is one time slot number within one frame $\mu$ for the subcarrier spacing configuration $\mu$.

As one sub-embodiment of this embodiment, the first $n_{s,f}^{\mu}$ is the time slot number of the first time slot.

As one sub-embodiment of this embodiment, the first $n_{s,f}^{\mu}$ is the time slot number of the first time slot within the one frame $\mu$ for the above subcarrier spacing configuration.

As one embodiment, the first RS resource is not configured with the second $T_{\text{offset}}$ and the second $T_{\text{CSI-RS}}$.

As one embodiment, one physical resource block in the present application is one PRB in an NR system.

As one embodiment, one physical resource block in the present application is one PRB in an LTE system.

As one embodiment, one physical resource block in the present application refers to TS 38.211 of 3GPP.

As one embodiment, one physical resource block in the present application refers to TS 36.211 of 3GPP.

As one embodiment, one physical resource block in the present application comprises a time-domain resource and a frequency domain resource.

As one embodiment, one physical resource block in the present application occupies one time slot in the time domain.

As one embodiment, one physical resource block in the present application occupies a plurality of time slots in the time domain.

As one embodiment, one physical resource block in the present application comprises 12 subcarriers in the frequency domain and 7 OFDM symbols in the time domain.

As one embodiment, one physical resource block in the present application comprises a plurality of REs, each RE consisting of 1 subcarrier in the frequency domain and 1 OFDM symbol in the frequency domain.

As one embodiment, one physical resource block in the present application comprises 12×7 REs.

As one embodiment, one time slot in the present application is one PRB in the NR system.

As one embodiment, one time slot in the present application is one PRB in the LTE system.

As one embodiment, one time slot in the present application refers to TS 38.211 of 3GPP.

As one embodiment, one time slot in the present application refers to TS 36.211 of 3GPP.

As one embodiment, the number of OFDM symbols comprised in one time slot in the present application is configurable.

As one embodiment, the number of OFDM symbols comprised in one time slot in the present application is pre-defined.

As one embodiment, the number of OFDM symbols comprised in one time slot in the present application is pre-configured.

As one embodiment, one time slot in the present application comprises at least one OFDM symbol.

As one embodiment, one time slot in the present application comprises 7 OFDM symbols.

As one embodiment, one time slot in the present application comprises 1 OFDM symbol.

As one embodiment, each RS resource in the at least first RS resource is configured with the periodicity.

As one embodiment, any two RS resources in the at least first RS resource are configured with the same periodicity.

As one embodiment, there are two RS resources in the at least first RS resource that are configured with different periodicities.

As one embodiment, each RS resource in the at least first RS resource is configured with the periodicity for at least one time-domain resource other than the first time-domain resource.

As one embodiment, each RS resource in the at least first RS resources is configured with the periodicity for the first time-domain resource.

As one embodiment, at least one RS resource in the at least first RS resources is not configured with the periodicity for the first time-domain resource.

As one embodiment, the periodicity of one RS resource is indicated by one periodicityAndOffset domain.

As one embodiment, the periodicity of one RS resource is indicated by one CSI-ResourcePeriodicityAndOffset domain.

As one embodiment, the periodicity of one RS resource is indicated by one domain comprising a periodicity AndOffset in its name.

As one embodiment, the periodicity of one RS resource is indicated by one domain comprising a CSI-ResourcePeriodicityAndOffset in its name.

As one embodiment, the DTX refers to discontinuous transmission.

As one embodiment, the DTX refers to discontinuous sending.

As one embodiment, the DTX refers to sending a pre-defined channel or signal on only part of time-domain resources within one time periodicity.

As one embodiment, the active time of the DTX refers to the active time.

As one embodiment, the active time of the DTX refers to an active period.

As one embodiment, the inactive time of the DTX refers to the inactive time.

As one embodiment, the inactive time of the DTX refers to an inactive period.

## Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in figures, the 5GS/EPS provides packet switching services, however, those skilled in the art will readily appreciate that the various concepts presented throughout the present application may be extended to networks providing circuit switching services or other cellular networks. RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one base station (BS) device.

As one embodiment, the UE201 is one relay device.

As one embodiment, the node 203 corresponds to a second node in the present application.

As one embodiment, the node 203 is one base station device.

As one embodiment, the node 203 is user equipment.

As one embodiment, the node 203 is one relay device.

As one embodiment, the node 203 is a gateway.

As one embodiment, the user equipment supports transmission in a terrestrial network (TN).

As one embodiment, the user equipment supports transmission in a non-terrestrial network.

As one embodiment, the user equipment supports transmission in a large delay difference network.

As one embodiment, the user equipment supports dual connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-latency and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a Node B (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports transmission in the non-terrestrial network.

As one embodiment, the base station device supports transmission in the large delay difference network.

As one embodiment, the base station device supports transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a base station device supporting a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises the test device.

As one embodiment, the base station device comprises the signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises the base station device.

## Embodiment 3

Embodiment 3 shows a schematic diagram of one embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the radio protocol architecture in FIG. 3 is applicable to a first node in the present application.

As one embodiment, the radio protocol architecture in FIG. 3 is applicable to a second node in the present application.

As one embodiment, a first signaling in the present application is generated in an RRC306.

As one embodiment, the first signaling in the present application is generated in an MAC302 or MAC352.

As one embodiment, the first signaling in the present application is generated in the PHY301 or PHY351.

As one embodiment, a second signaling in the present application is generated in an RRC306.

As one embodiment, the second signaling in the present application is generated in the MAC302 or MAC352.

As one embodiment, the second signaling in the present application is generated in the PHY301 or PHY351.

As one embodiment, a first message in the present application is generated in the RRC306.

As one embodiment, the first message in the present application is generated in the MAC302 or MAC352.

As one embodiment, the first message in the present application is generated in the PHY301 or PHY351.

## Embodiment 4

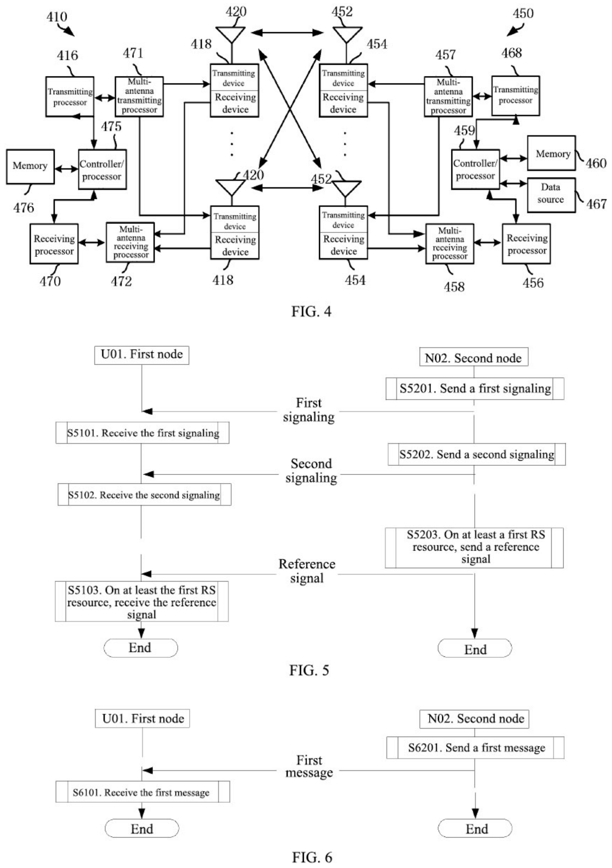

Embodiment 4 shows a schematic diagram of a first communication device and a second communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets, and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal clusters based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/-beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, deciphering, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for a user plane and a control plane. The controller/processor 459 is also responsible for retransmission of lost packets, and signaling to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts the baseband symbol stream provided by the multi-antenna transmitting processor 457 into the radio frequency stream, which is then provided to different antennas 452.

In the transmission from the first communication device 450 to the second communication device 410, the function at the second communication device 410 is similar to the receiving function at the first communication device 450 as described in the transmission from the second communication device 410 to the first communication device 450. Each receiving device 418 receives the radio frequency signal through its corresponding antenna 420, converts the received radio frequency signal into the baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, deciphering, header decompression, and control signal processing to recover upper-layer data packets from UE450. The upper-layer data packets from the controller/processor 475 may be provided to the core network.

As one embodiment, the first communication device 450 comprises: at least one processor and at least one memory, the at least one memory comprising a computer program code; the at least one memory and the computer program code being configured to be used together with the at least one processor, wherein the first communication device 450 at least: receives a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receives a reference signal, wherein whether the at least first RS resource occupies in a time domain the time-domain resource of the first time slot depends on at least one of a length of the first time-domain resource and a position of the first time slot in the first time-domain resource.

As one embodiment, the first communication device 450 comprises: a memory storing a computer-readable instruction program, wherein the computer-readable instruction program generates actions when executed by at least one processor, the action comprising: receiving the first signaling and the second signaling, the first signaling being used for configuring at least the former of the resource occupied by at least the first RS resource in the frequency domain and the time-domain resource occupied by the at least first RS resource on the physical resource block, the second signaling being used for determining the first time-domain resource, and the first time-domain resource comprising the first time slot; and, on the at least first RS resource, receiving the reference signal, wherein whether the at least first RS resource occupies in the time domain the time-domain resource of the first time slot depends on at least one of the length of the first time-domain resource and the position of the first time slot in the first time-domain resource.

As one embodiment, the second communication device 410 comprises: at least one processor and at least one memory, wherein the at least one memory comprising a computer program code; and the at least one memory and the computer program code are configured to be used together with the at least one processor. the second communication device 410 at least: sends the first signaling and the second signaling, the first signaling being used for configuring at least the former of the resource occupied by at least the first RS resource in the frequency domain and the time-domain resource occupied by the at least first RS resource on the physical resource block, the second signaling being used for determining the first time-domain resource, and the first time-domain resource comprising the first time slot; and, on the at least first RS resource, receives the reference signal, wherein whether the at least first RS resource occupies in the time domain the time-domain resource of the first time slot depends on at least one of the length of the first time-domain resource and the position of the first time slot in the first time-domain resource.

As one embodiment, the second communication device 410 comprises: a memory storing a computer-readable instruction program, wherein the computer-readable instruction program generates actions when executed by at least one processor, the action comprising: sending the first signaling and the second signaling, the first signaling being used for configuring at least the former of the resource occupied by at least the first RS resource in the frequency domain and the time-domain resource occupied by the at least first RS resource on the physical resource block, the second signaling being used for determining the first time-domain resource, and the first time-domain resource comprising the first time slot; and, on the at least first RS resource, receiving the reference signal, wherein whether the at least first RS resource occupies in the time domain the time-domain resource of the first time slot depends on at least one of the length of the first time-domain resource and the position of the first time slot in the first time-domain resource.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving the second signaling.

As one embodiment, at least one of the antenna 420, the transmitting device 418, the transmitting processor 416, and the controller/processor 475 is used for sending the second signaling.

As one embodiment, at least one of the antenna 452, the receiving device 454, the receiving processor 456, and the controller/processor 459 is used for receiving a first message.

As one embodiment, at least one of the antenna 420, the transmitting device 418, the transmitting processor 416, and the controller/processor 475 is used for sending the first message.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the second communication device 410 is one piece of user equipment.

As one embodiment, the second communication device 410 is one base station device.

**Embodiment 5**

Embodiment 5 illustrates a flowchart of radio signal transmission according to one embodiment of the present application, as shown in FIG. 5. It is particularly noted that the order in this example does not limit the signal transmission order and implementation order in the present application.

For **a first node U01,** in step S5101, a first signaling is received; in step S5102, a second signaling is received; and in step S5103, a reference signal is received on at least a first RS resource.

For **a second node N02,** in step S5201, the first signaling is sent; in step S5202, the second signaling is sent; and in step S5203, the reference signal is sent on the at least first RS resource.

In Embodiment 5, the first signaling is used for configuring at least the former of a resource occupied by at least the first RS resource in a frequency domain and a time-domain resource occupied by the at least first RS resource on a physical resource block, the second signaling is used for determining a first time-domain resource, and the first time-domain resource comprises a first time slot; and whether the at least first RS resource occupies in a time domain the time-domain resource of the first time slot depends on at least one of a length of the first time-domain resource and a position of the first time slot in the first time-domain resource.

As one embodiment, at least after the step S5101, the step S5103 is executed.

As one embodiment, before the step S5102, the step S5103 is executed.

As one embodiment, before the step S5102, the step S5103 is not executed.

As one embodiment, after the step S5102, the step S5103 is executed.

As one embodiment, after the step S5102, whether the at least first RS resource occupies in the time domain the time-domain resource of the first time slot depends on at least one of the length of the first time-domain resource and the position of the first time slot in the first time-domain resource.

As one embodiment, before the step S5102, the time-domain resource of the time slot occupied by the at least first RS resource in the time domain depends on a first $T_{offset}$ and a first $T_{CSI-RS}$.

As one embodiment, before the step S5102, the time slot occupied by the at least first RS resource in the time domain satisfies: ( $\text{first } N_{slot}^{frame,\mu} n_f + n_{s,f}^{\mu} - \text{first } T_{offset}$ ) mod first $T_{CSI-RS}$ is equal to 0.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the first node U01 is one piece of user equipment, and the second node N02 is one base station device.

As one embodiment, the first node U01 is one piece of user equipment, and the second node N02 is one piece of user equipment.

As one embodiment, the first node U01 is one base station device, and the second node N02 is one base station device.

**Embodiment 6**

Embodiment 6 illustrates a flowchart of radio signal transmission according to another embodiment of the present application, as shown in FIG. 6. It is particularly noted that the order in this example does not limit the signal transmission order and implementation order in the present application.

For **a first node U01,** in step S6101, a first message is received.

For **a second node N02,** in step S6201, the first message is sent.

In Embodiment 6, the first message is one RRC message, and the first message comprises a first time length and a first cycle length of first DTX; at least the first time length is used for determining an active time of the first DTX; at least the first cycle length is used for determining a duration of each DTX cycle of the first DTX; and a first time-domain resource belongs to an inactive time of the first DTX.

As one embodiment, the first message is one RRC message, and a second signaling is one MAC CE.

As one embodiment, the first message is one RRC message, and the second signaling is one piece of DCI.

As one embodiment, the first message is the second signaling, and the second signaling is one RRC message.

As one embodiment, the first message comprises the second signaling, the second signaling comprises the first time length and the first cycle length of the first DTX, and the first time length and the first cycle length of the first DTX are used for determining the first time-domain resource.

As one embodiment, the first message comprises at least one RRC domain comprising DTX in its name.

As one embodiment, the first message comprises at least one RRC domain comprising a DTX-Config in its name.

As one embodiment, the first message indicates the first time length and the first cycle length of the first DTX.

As one embodiment, one RRC domain in the first message indicates the first cycle length of the first DTX.

As one embodiment, one RRC domain comprising a dtx-LongCycleStartOffset in its name in the first message indicates the first cycle length of the first DTX.

As one embodiment, one RRC domain comprising a dtx-CycleStartOffset in its name in the first message indicates the first cycle length of the first DTX.

As one embodiment, one RRC domain comprising at least one of dtx or Long or Cycle or Start or Offset in its name in the first message indicates the first cycle length of the first DTX.

As one embodiment, the first cycle length is the DTX cycle of the first DTX.

As one embodiment, the first cycle length is a long DTX cycle of the first DTX.

As one embodiment, the first cycle length comprises at least 1 millisecond.

As one embodiment, the first cycle length comprises at least 1 time slot.

As one embodiment, the first cycle length comprises at least 1 second.

As one embodiment, one RRC domain in the first message indicates the first time length of the first DTX.

As one embodiment, one RRC domain comprising a dtx-onDurationTimer in its name in the first message indicates the first time length of the first DTX.

As one embodiment, one RRC domain comprising at least one of dtx or on or Duration or Timer in its name in the first message indicates the first time length of the first DTX.

As one embodiment, one RRC domain comprising a first timer in its name in the first message indicates the first time length of the first DTX.

As one embodiment, the first time length comprises at least 1 millisecond.

As one embodiment, the first time length comprises at least 1 time slot.

As one embodiment, the first time length comprises at least 1 second.

As one embodiment, the first time length is the maximum running time of the first timer.

As one embodiment, the first time length is a value of the first timer.

As one embodiment, the first time length is the duration at the beginning of each DTX cycle of the first DTX.

As one embodiment, one RRC domain of the first message indicates a first starting offset value.

As one embodiment, an RRC domain indicating the first cycle length of the first DTX in the first message also indicates the first starting offset value.

As one embodiment, the RRC domain comprising a dtx-StartOffset in its name in the first message indicates the first starting offset value.

As one embodiment, the RRC domain comprising at least one of dtx or Start or Offset in its name in the first message indicates the first starting offset value.

As one embodiment, the first starting offset value is used for determining a subframe at the beginning of one DTX cycle of the first DTX starts.

As one embodiment, the first starting offset value refers to an offset value of a starting moment of one DTX cycle of the first DTX.

As one embodiment, the first starting offset value refers to a delay before the first timer starts.

As one embodiment, in each DTX cycle of the first DTX, the first timer is started.

As one embodiment, at the starting moment of each DTX cycle of the first DTX, the first timer is started.

As one embodiment, the starting moment of one DTX cycle of the first DTX is the starting moment of one subframe.

As one embodiment, the starting moment of one DTX cycle of the first DTX is the starting moment of one subframe; The one subframe depends on at least one of an SFN (System Frame Number) or a subframe number of the one subframe or the first cycle length or the first starting offset value.

As one embodiment, the starting moment of one DTX cycle of the first DTX is the starting moment of one subframe; wherein [(SFN × 10) + the subframe number of the one subframe] modulo (the first cycle length) = the first starting offset value.

As one embodiment, if [(SFN × 10) + the subframe number of the one subframe] modulo (the first cycle length) = the first starting offset value, the first timer is started at the starting moment of the one subframe.

As one embodiment, the starting moment of one DTX cycle of the first DTX is the starting moment of the one subframe; wherein [(SFN × 10) + the subframe number of the one subframe] modulo (the first cycle length) = (the first starting offset value) modulo (the first cycle length).

As one embodiment, if [(SFN × 10) + the subframe number of the one subframe] modulo (the first cycle length) = (the first starting offset value) modulo (the first cycle length), the first timer is started.

As one embodiment, the active time of the first DTX comprises the duration at the beginning of each DTX cycle, and the length of the duration is equal to the first time length.

As one embodiment, the active time of the first DTX comprises the time when only the first timer is running.

As one embodiment, the active time of the first DTX comprises at least the time when the first timer is running.

As one embodiment, the length of the active time of each DTX cycle of the first DTX is not less than the first time length.

As one embodiment, the length of the active time of each DTX cycle of the first DTX is equal to the first time length.

As one embodiment, the active time of the first DTX comprises the running time of a second timer, and the second timer is one timer other than the first timer.

As one sub-embodiment of this embodiment, the second timer is one dtx-InactivityTimer.

As one sub-embodiment of this embodiment, the second timer is one ra-ContentionResolutionTimer.

As one sub-embodiment of this embodiment, the second timer is one msgB-ResponseWindow.

As one embodiment, the length of the duration of each DTX cycle of the first DTX is the first cycle length.

As one embodiment, the first cycle length is used for determining the length of the duration of each DTX cycle of the first DTX.

As one embodiment, the first time length is not greater than the first cycle length.

As one embodiment, the first time length is less than the first cycle length.

As one embodiment, the first time-domain resource is the inactive time within one DTX cycle of the first DTX.

As one embodiment, the first time-domain resource is the time other than the active time of the first DTX.

## Embodiment 7

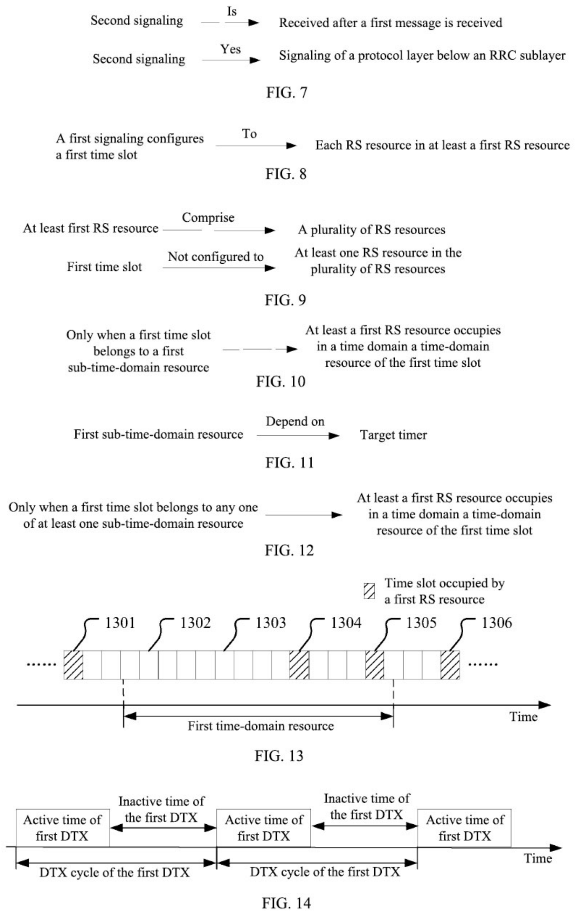

Embodiment 7 illustrates a schematic diagram of a second signaling being received after a first message is received and the second signaling being a signaling of a protocol layer below an RRC sublayer according to one embodiment of the present application, as shown in FIG. 7.

In Embodiment 7, the second signaling is received after the first message is received; and the second signaling is the signaling of the protocol layer below the RRC sublayer.

As one embodiment, a starting moment of a first time-domain resource is later than or not earlier than a receiving moment of the second signaling.

As one embodiment, the second signaling is one MAC CE.

As one embodiment, the second signaling is one piece of DCI.

As one embodiment, the second signaling is received and used for determining to start first DTX.

As one embodiment, the second signaling is received and used for determining to start a second timer.

As one embodiment, the second signaling is used for stopping second DTX and starting the first DTX.

As one embodiment, the second signaling is used for changing a configuration of the first DTX.

As one embodiment, the above configuration of the first DTX comprises a value of a first timer, wherein the first timer is configured.

As one embodiment, the above configuration of the first DTX comprises a DTX cycle of the first DTX.

As one embodiment, the above configuration of the first DTX comprises the value of the second timer, wherein the second timer is configured.

As one embodiment, an active time of the first DTX comprises a time from when the second signaling is received to when the first timer is started for the first time after the second signaling.

As one embodiment, the active time of the first DTX does not comprise the time from when the second signaling is received to when the first timer is started for the first time after the second signaling.

As one embodiment, the first message is used for starting the first DTX.

As one embodiment, the second signaling is used for starting the first DTX.

As one embodiment, after the first message is received, the first DTX is started.

As one embodiment, after the first message is received and before the second signaling is received, the first DTX of a first cell is not started.

As one embodiment, the starting of the first DTX depends on the second signaling.

As one embodiment, within a time interval from when the first message is received to when the second signaling is received, the first DTX of the first cell is not started.

As one sub-embodiment of this embodiment, any time slot in the time interval between when the first message is received and when the second signaling in the present application is received does not belong to the first time-domain resource.

As one sub-embodiment of this embodiment, the time interval between when the first message is received and when the second signaling in the present application is received belongs to a time-domain resource other than the first time-domain resource.

As one embodiment, after the first message is received and before the second signaling is received, the second DTX of the first cell is started.

As one embodiment, starting from the K1-th time slot after the second signaling is received, the first cell is in an inactive state of the first DTX within a first time interval; and K1 is a positive integer.

As one embodiment, starting from the K1-th time slot after the second signaling is received, the first DTX is started.

As one embodiment, starting from the K1-th time slot after the second signaling is received, the first timer is started.

As one embodiment, a behavior of stopping the second DTX comprises: not continuing to execute the second DTX operation.

As one embodiment, the behavior of stopping the second DTX comprises: not continuing to execute the operation of the active time of the second DTX and the operation of the inactive time of the second DTX.

As one embodiment, the behavior of starting the first DTX comprises: starting to execute the first DTX operation.

As one embodiment, the behavior of starting the first DTX comprises: starting to execute the operation of the active time of the first DTX and the operation of the inactive time of the first DTX.

As one embodiment, the behavior of starting the first DTX comprises: starting to maintain the first timer.

## Embodiment 8

Embodiment 8 illustrates a schematic diagram of a first signaling configuring a first time slot to each RS resource in at least a first RS resource according to one embodiment of the present application, as shown in FIG. 8.

In Embodiment 8, the first signaling configures the first time slot to each RS resource in the at least first RS resource.

As one embodiment, the at least first RS resource comprises any RS resource configured with the first time slot.

As one embodiment, the at least first RS resource comprises any RS resource of a first cell configured with the first time slot.

As one embodiment, the at least first RS resource comprises any RS resource of the first cell configured with the first time slot.

As one embodiment, "the first signaling configures the first time slot to one RS resource" refers to: a periodicity of at least the one RS resource is used for determining that the first time slot is configured to the one RS resource; and the first signaling indicates the periodicity of the one RS resource.

As one embodiment, "the first signaling configures the first time slot to one RS resource" refers to: configuration information in the first signaling is used for determining that the first time slot is reserved for the one RS resource.

As one embodiment, "the first signaling configures the first time slot to one RS resource" refers to: configuration information in the first signaling is used for determining that the first time slot is used as a candidate of a time slot occupied by the one RS resource.

As one embodiment, "the first signaling configures the first time slot to one RS resource" refers to: the first signaling is used for configuring $T_{offset}$ and $T_{CSI-RS}$ of the one RS resource, and at least the $T_{offset}$ and the $T_{CSI-RS}$ of the one RS resource are used for determining the first time slot.

As one embodiment, "the first signaling configures the first time slot to one RS resource" refers to: the first signaling is used for configuring the $T_{offset}$ and the $T_{CSI-RS}$ of the one RS resource, and the first time slot satisfies:

$$\left( N_{slot}^{frame,\mu} \text{first } n_f + \text{first } n_{s,f}^{\mu} - T_{offset} \right) \bmod T_{CSI-RS}$$ is equal to 0, wherein the first $n_{s,f}^{\mu}$ indicates the first time slot, the first $n_f$ indicates a system frame to which the first time slot belongs, and $\mu$ in the $N_{slot}^{frame,\mu}$ is configured to a BWP to which the one RS resource belongs.

As one embodiment, "the first signaling configures the first time slot to the first RS resource" refers to: the first signaling is used for configuring a first $T_{offset}$ and a first $T_{CSI-RS}$ of the first RS resource, and the first time slot satisfies:

$$\left( \text{first } N_{slot}^{frame,\mu} \text{first } n_f + \text{first } n_{s,f}^{\mu} - \text{first } T_{offset} \right) \bmod \text{ first } T_{CSI-RS}$$ is equal to 0, wherein the first $n_{s,f}^{\mu}$

indicates the first time slot, the first $n_f$ indicates the system frame to which the first time slot belongs, and $\mu$ in the first $N_{slot}^{frame,\mu}$ is configured to the BWP to which the first RS resource belongs.

As one embodiment, "the first signaling configures the first time slot to the first RS resource" refers to: the first signaling is used for configuring the first $T_{offset}$, the first $T_{CSI-RS}$, a second $T_{offset}$, and a second $T_{CSI-RS}$ of the first RS resource, and the first time slot satisfies: $\left( \text{first } N_{slot}^{frame,\mu} \text{first } n_f + \text{first } n_{s,f}^{\mu} - \text{second } T_{offset} \right) \bmod$ second

$T_{CSI-RS}$ is equal to 0, wherein the first $n_{s,f}^{\mu}$ indicates the first time slot, the first $n_f$ indicates the system frame to which the first time slot belongs, and $\mu$ in the first $N_{slot}^{frame,\mu}$ is configured to the BWP to which the first RS resource belongs.

As one embodiment, the first time slot is one time slot in the first time-domain resource for the $T_{offset}$ and the $T_{CSI-RS}$ of each RS resource in the at least first RS resource that satisfies $\left(N_{slot}^{frame,\mu}n_f + n_{s,f}^{\mu} - T_{offset}\right) \bmod T_{CSI-RS}$ is equal to 0, wherein $\mu$ in the $N_{slot}^{frame,\mu}$ is configured to the BWP to which each RS resource belongs.

As one embodiment, the first signaling comprises a periodicityAndOffset domain for each RS resource in the at least first RS resource.

As one embodiment, the first signaling comprises a domain comprising a periodicity AndOffset in its name for each RS resource in the at least first RS resource.

As one embodiment, the first signaling comprises a CSI-ResourcePeriodicityAndOffset domain for each RS resource in the at least first RS resource.

As one embodiment, the first signaling comprises a domain comprising a CSI-ResourcePeriodicity AndOffset in its name for each RS resource in the at least first RS resource.

As one embodiment, one periodicityAndOffset domain is used for configuring the periodicity of one RS resource and a time slot offset of one RS resource.

As one embodiment, one CSI-ResourcePeriodicityAndOffset domain is used for configuring the periodicity of one RS resource and the time slot offset of one RS resource.

As one embodiment, one domain comprising a CSI-ResourcePeriodicityAndOffset in its name is used for configuring the periodicity of one RS resource and the time slot offset of one RS resource.

As one embodiment, the periodicity of one RS resource is one $T_{CSI-RS}$.

As one embodiment, the time slot offset of one RS resource is one $T_{offset}$.

As one embodiment, each RS resource in the at least first RS resource is configured to one BWP configured with a subcarrier spacing configuration $\mu$.

As one embodiment, the subcarrier spacing configurations $\mu$ of any two RS resources in the at least first RS resource are the same.

As one embodiment, the subcarrier spacing configurations $\mu$ of at least two RS resources in the at least first RS resource are different.

As one embodiment, the $N_{slot}^{frame,\mu}$ of any two RS resources in the at least first RS resource are the same.

As one embodiment, the $N_{slot}^{frame,\mu}$ of at least two RS resources in the at least first RS resource are different.

As one embodiment, the first time slot depends on the periodicity of each RS resource in the at least first RS resource.

As one embodiment, the first time slot depends on the periodicity and time slot offset of each RS resource in the at least first RS resource.

As one embodiment, when the first signaling configures the first time slot to each RS resource in the at least first RS resource, whether the at least first RS resource occupies in the time domain the time-domain resource of the first time slot depends on at least one of a length of the first time-domain resource and a position of the first time slot in the first time-domain resource.

As one embodiment, if the first signaling does not configure the first time slot to one RS resource, the one RS resource does not occupy in the time domain the time-domain resource of the first time slot.

As one embodiment, whether one RS resource occupies in the time domain the time-domain resource of the first time slot configured to the one RS resource depends on at least one of the length of the first time-domain resource and the position of the first time slot in the first time-domain resource.

As one embodiment, the at least first RS resource is the first RS resource.

As one embodiment, the at least first RS resource comprises a plurality of RS resources, and the first RS resource is one RS resource in the plurality of RS resources.

## Embodiment 9

Embodiment 9 illustrates a schematic diagram of at least a first RS resource comprising a plurality of RS resources and a first time slot not being configured to at least one RS resource in the plurality of RS resources according to one embodiment of the present application, as shown in FIG. 9.

In Embodiment 9, the at least first RS resource comprises a plurality of RS resources, and the first time slot is not configured to at least one RS resource in the plurality of RS resources.

As one embodiment, the first time slot is not configured to at least one RS resource in the plurality of RS resources, and the first time slot is configured to at least one RS resource in the plurality of RS resources.

As one embodiment, the first time slot is not configured to any RS resource in the plurality of RS resources.

As one embodiment, "the first time slot is not configured to one RS resource" refers to: the first time slot is not configured to the one RS resource by an RRC signaling.

As one embodiment, "the first time slot is not configured to one RS resource" refers to: the first time slot is not configured to the one RS resource by $T_{offset}$ and $T_{CSI-RS}$ of the one RS resource.

As one embodiment, "the first time slot is not configured to one RS resource" refers to: the first time slot does not depend on $T_{offset}$ and $T_{CSI-RS}$ of the one RS resource.

As one embodiment, "the first time slot is not configured to one RS resource" refers to: for $T_{offset}$ and $T_{CSI-RS}$ of the one RS resource, the first time slot does not satisfy $\left(N_{slot}^{frame,\mu} n_f + n_{s,f}^{\mu} - T_{offset}\right) \mod T_{CSI-RS}$ is equal to 0, wherein $\mu$ in the $N_{slot}^{frame,\mu}$ is configured to a BWP to which the one RS resource belongs.

As one embodiment, "the first time slot is not configured to the first RS resource" means: for a first $T_{offset}$ and a first $T_{CSI-RS}$ of the first RS resource, the first time slot does not satisfy: $\left(first\ N_{slot}^{frame,\mu} first\ n_f + first\ n_{s,f}^{\mu} - first\ T_{offset}\right) \mod$ first $T_{CSI-RS}$ is equal to 0, wherein the first $n_{s,f}^{\mu}$ indicates the first time slot, the first $n_f$ indicates a system frame to which the first time slot belongs, and $\mu$ in the first $N_{slot}^{frame,\mu}$ is configured to the BWP to which the first RS resource belongs.

As one embodiment, "at least two RS resources in the at least first RS resources are configured with different periodicities" is used for determining that the first time slot is not configured to at least one RS resource in the plurality of RS resources; and wherein the first time slot is configured to one RS resource in the at least two RS resources.

As one embodiment, whether the at least first RS resource occupies in a time domain a time-domain resource of the first time slot is determined according to at least one of a length of a first time-domain resource and a position of the first time slot in the first time-domain resource.

As one embodiment, whether each RS resource in the at least first RS resource occupies in the time domain the time-domain resource of the first time slot is determined according to at least one of the length of the first time-domain resource and the position of the first time slot in the first time-domain resource.

As one embodiment, whether all RS resources in the at least first RS resource occupy in the time domain the time-domain resource of the first time slot depends on at least one of the length of the first time-domain resource and the position of the first time slot in the first time-domain resource; and the at least first RS resource comprises a plurality of RS resources, and the first time slot is not configured to at least one RS resource in the plurality of RS resources.

As one embodiment, the first time-domain resource comprises a first time slot set, and the first time slot set comprises a plurality of time slots; and only when the first time slot belongs to the first time slot set, the at least first RS resource occupies in the time domain the time-domain resource of the first time slot.

As one sub-embodiment of this embodiment, only when the first time slot belongs to the first time slot set, each RS resource in the at least first RS resource occupies in the time domain the time-domain resource of one time slot in the first time slot set.

As one sub-embodiment of this embodiment, only when the first time slot belongs to the first time slot set, the at least first RS resource occupies in the time domain the time-domain resource of at least one time slot in the first time slot set.

As one sub-embodiment of this embodiment, if the first time slot does not belong to the first time slot set, the at least first RS resource does not occupy in the time domain the time-domain resource of the first time slot.

As one sub-embodiment of this embodiment, the first time slot is any time slot in the first time slot set.

As one sub-embodiment of this embodiment, the first time slot is one time slot in the first time slot set.

As one sub-embodiment of this embodiment, the determination of each time slot in the first time slot set is unrelated to $T_{offset}$ and $T_{CSI-RS}$ of each RS resource in the at least first RS resource.

As one sub-embodiment of this embodiment, each time slot in the first time slot set does not depend on $T_{offset}$ and $T_{CSI-RS}$ of each RS resource in the at least first RS resource.

As one sub-embodiment of this embodiment, each time slot in the first time slot set is unrelated to whether

$$\left(N_{slot}^{frame,\mu} n_f + n_{s,f}^{\mu} - \text{first } T_{offset}\right) \bmod \text{ first } T_{\text{CSI-RS}} \text{ is equal to 0.}$$

As one sub-embodiment of this embodiment, the first time slot set is pre-defined.

As one sub-embodiment of this embodiment, the first time slot set is the M2-th time slots from the end in one DTX cycle of first DTX, and M2 is a positive integer.

As one sub-embodiment of this embodiment, time slot numbers of any two time slots in the first time slot set are continuous.

As one sub-embodiment of this embodiment, there are two time slots in the first time slot set whose time slot numbers of are not continuous.

As one sub-embodiment of this embodiment, the time slot numbers of any two time slots in the first time slot set are not continuous.

As one sub-embodiment of this embodiment, time slot positions in the first time slot set are configurable.

As one sub-embodiment of this embodiment, intervals between any two adjacent time slots in the first time slot set are equal.

As one embodiment, only when the first time slot is a second time slot, the at least first RS resource occupies in the time domain the time-domain resource of the first time slot; and the second time slot belongs to the first time-domain resource.

As one sub-embodiment of this embodiment, only when the first time slot is the second time slot, each RS resource in the at least first RS resources occupies in the time domain the time-domain resource of the first time slot.

As one sub-embodiment of this embodiment, if the first time slot is not the second time slot, the at least first RS resource does not occupy in the time domain the time-domain resource of the first time slot.

As one sub-embodiment of this embodiment, the second time slot is the M1-th time slot from the end in one DTX cycle of the first DTX, and M1 is a positive integer.

As one sub-embodiment of this embodiment, M1 is 1.

As one sub-embodiment of this embodiment, M1 is greater than 1.

As one sub-embodiment of this embodiment, the second time slot is pre-defined.

As one sub-embodiment of this embodiment, the second time slot is an ending moment of one DTX cycle of the first DTX.

As one sub-embodiment of this embodiment, the second time slot depends on the first DTX.

As one sub-embodiment of this embodiment, the second time slot depends on one DTX cycle of the first DTX.

As one embodiment, the first time slot is not configured to the first RS resource, and the first RS resource occupies in the time domain the time-domain resource of the first time slot.

As one embodiment, the first time slot is configured to the first RS resource, and the first RS resource does not occupy in the time domain the time-domain resource of the first time slot.

### Embodiment 10

Embodiment 10 illustrates a schematic diagram of whether at least a first RS resource occupies in a time domain a time-domain resource of a first time slot depending on a position of the first time slot in a first time-domain resource according to one embodiment of the present application, as shown in FIG. 10.

In Embodiment 10, only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

As one embodiment, the first sub-time-domain resource comprises at least one time slot.

As one embodiment, the first sub-time-domain resource comprises at least 1 millisecond.

As one embodiment, the first sub-time-domain resource is one time slot.

As one embodiment, whether the first time slot belongs to the first sub-time-domain resource is used for determining the position of the first time slot in the first time-domain resource.

As one embodiment, if the first time slot belongs to the first sub-time-domain resource, the at least first RS resource occupies in the time domain the time-domain resource of the first time slot; and if the first time slot does not belong to the first sub-time-domain resource, the at least first RS resource does not occupy in the time domain the time-domain resource of the first time slot.

As one embodiment, as long as the first time slot does not belong to the first sub-time-domain resource, the at least first RS resource does not occupy in the time domain the time-domain resource of the first time slot.

As one sub-embodiment of this embodiment, the first RS resource does not occupy in the time domain any time slot other than the first sub-time-domain resource in the first time-domain resource.

As one sub-embodiment of this embodiment, a first node should assume that a reference signal is not sent in any time slot other than the first sub-time-domain resource in the first time-domain resource.

As one embodiment, the phrase "the first time slot belongs to a first sub-time-domain resource" comprises: the first sub-time-domain resource comprises the first time slot.

As one embodiment, the phrase "the first time slot belongs to a first sub-time-domain resource" comprises: the first time slot is one time slot in the first sub-time-domain resource.

As one embodiment, the meaning of a phrase "the first sub-time-domain resource is one subset of the first time-domain resource" refers to: the first sub-time-domain resource is one true subset of the first time-domain resource.

As one embodiment, the meaning of the phrase "the first sub-time-domain resource is one subset of the first time-domain resource" refers to: the first sub-time-domain resource belongs to the first time-domain resource.

As one embodiment, the meaning of the phrase "the first sub-time-domain resource is one subset of the first time-domain resource" refers to: any time slot in the first sub-time-domain resource belongs to the first time-domain resource.

As one embodiment, the meaning of the phrase "the first sub-time-domain resource is one subset of the first time-domain resource" refers to: the first sub-time-domain resource is all or part of the time-domain resources in the first time-domain resource.

As one embodiment, a first signaling indicates the first sub-time-domain resource within a DTX cycle of first DTX.

As one embodiment, the first signaling comprises one RRC domain, the one RRC domain comprises an index of each RS resource in the at least first RS resource, and the one RRC domain is used for determining that the first sub-time-domain resource is configured to each RS resource in the at least first RS resource.

As one embodiment, the first sub-time-domain resource is pre-defined.

As one embodiment, the first sub-time-domain resource is pre-configured.

As one embodiment, the first sub-time-domain resource depends on a target timer in the present application.

As one embodiment, the first sub-time-domain resource depends on one timer.

As one sub-embodiment of this embodiment, the one timer is not the target timer in the present application.

As one sub-embodiment of this embodiment, the first sub-time-domain resource comprises a time when the one timer in the first time-domain resource is running.

As one sub-embodiment of this embodiment, the first sub-time-domain resource is the time when the one timer in the first time-domain resource is running.

As one sub-embodiment of this embodiment, an active time of the first DTX does not comprise the time when the one timer is running.

As one sub-embodiment of this embodiment, the time when the one timer is running is an inactive time of the first DTX.

As one sub-embodiment of this embodiment, whether the one timer is running in the first time slot is used for determining the position of the first time slot in the first time-domain resource; whether the at least first RS resource occupies in the time domain the time-domain resource of the first time slot depends on the position of the first time slot in the first time-domain resource.

As one subsidiary embodiment of this sub-embodiment, whether the at least first RS resource occupies in the time domain the time-domain resources of the first time slot depends on whether the one timer is running in the first time slot.

As one subsidiary embodiment of this sub-embodiment, if the one timer is running in the first time slot, the at least first RS resource occupies in the time domain the time-domain resource of the first time slot; and if the one timer is not running in the first time slot, the at least first RS resource does not occupy in the time domain the time-domain resource of the first time slot.

## Embodiment 11

Embodiment 11 illustrates a schematic diagram of a first sub-time-domain resource depending on a target timer according to one embodiment of the present application, as shown in FIG. 11.

In Embodiment 11, the first sub-time-domain resource depends on the target timer, and a moment when the target timer expires is used for determining a starting moment of the first sub-time-domain resource.

As one embodiment, the target timer is one timer of an MAC sublayer.

As one embodiment, the starting moment of the target timer depends on a first timer.

As one embodiment, the starting moment of the target timer depends on the moment when the first timer expires.

As one embodiment, the moment when the first timer expires is used for determining the starting moment of the target timer.

As one embodiment, the target timer is started within a first time-domain resource.

As one embodiment, the target timer is started at the starting moment of the first time-domain resource.

As one embodiment, the target timer is started when the first timer expires.

As one embodiment, the target timer is started at the starting moment of the first timer.

As one embodiment, the target timer is started at the starting moment of an inactive time of first DTX.

As one embodiment, the target timer is started at an ending moment of an active time of the first DTX.

As one embodiment, the target timer is started at the starting moment of a DTX cycle of the first DTX.

As one embodiment, the active time of the first DTX does not comprise the time when the target timer is running.

As one embodiment, the inactive time of the first DTX comprises the time when the target timer is running.

As one embodiment, the active time of the first DTX does not depend on whether the target timer is running.

As one embodiment, the first sub-time-domain resource comprises all times when the target timer in the first time-domain resource is not running.

As one embodiment, the first sub-time-domain resource comprises at least part of the time when the target timer in the first time-domain resource is not running.

As one embodiment, the first sub-time-domain resource is the time when the target timer in the first time-domain resource is not running.

As one embodiment, the first sub-time-domain resource does not comprise the time when the target timer is running.

As one embodiment, whether the target timer is running in a first time slot is used for determining a position of the first time slot in the first time-domain resource; and whether the at least first RS resource occupies in a time domain a time-domain resource of the first time slot depends on the position of the first time slot in the first time-domain resource.

As one sub-embodiment of this embodiment, whether the at least first RS resource occupies in the time domain the time-domain resource of the first time slot depends on whether the target timer is running in the first time slot.

As one sub-embodiment of this embodiment, if the target timer is running in the first time slot, the at least first RS resource does not occupy in the time domain the time-domain resource of the first time slot; and if the target timer is not running in the first time slot, the at least first RS resource occupies in the time domain the time-domain resource of the first time slot.

**Embodiment 12**

Embodiment 12 illustrates a schematic diagram of a first time-domain resource comprising at least one sub-time-domain resource according to one embodiment of the present application, as shown in FIG. 12.

In Embodiment 12, the first time-domain resource comprises at least one sub-time-domain resource, and each sub-time-domain resource in the at least one sub-time-domain resource is one subset of the first time-domain resource; only when a first time slot belongs to any one of the at least one sub-time-domain resource, the at least first RS resource occupies in a time domain a time-domain resource of the first time slot; and whether the at least first RS resource occupies in the time domain the time-domain resource of the first time slot depends on a position of the first time slot in the first time-domain resource.

As one embodiment, a first signaling configures the first time slot to at least one RS resource in the at least first RS resources.

As one embodiment, the first signaling indicates each sub-time-domain resource in the at least one sub-time-domain resource within a DTX cycle of first DTX.

As one embodiment, the first signaling comprises one RRC domain, the one RRC domain comprises an index of each RS resource in the at least first RS resource, and the one RRC domain is used for determining that each sub-time-domain resource in the at least one sub-time-domain resource is configured to each RS resource in the at least first RS resource.

As one embodiment, each sub-time-domain resource in the at least one sub-time-domain resource comprises at least one time slot.

As one sub-embodiment of this embodiment, the first signaling configures the first time slot to each RS resource in the at least first RS resource.

As one sub-embodiment of this embodiment, the first signaling configures the first time slot to at least one RS resource in the at least first RS resource.

As one sub-embodiment of this embodiment, the first signaling configures the first time slot to at least the first RS resource in the at least first RS resource.

As one embodiment, the first signaling configures the first time slot to at least one RS resource in the at least first RS resources.

As one embodiment, the first signaling configures the first time slot to each RS resource in the at least first RS resource.

As one embodiment, the first time-domain resource comprises only one sub-time-domain resource.

As one embodiment, the first time-domain resource comprises a plurality of sub-time-domain resources.

As one embodiment, the first time-domain resource comprises one or more sub-time-domain resources.

As one embodiment, whether the first time slot belongs to any one of the at least one sub-time-domain resource is used for determining the position of the first time slot in the first time-domain resource.

As one embodiment, if the first time slot belongs to any one of the at least one sub-time-domain resource, the at least first RS resource occupies in the time domain the time-domain resource of the first time slot; and if the first time slot does not belong to any one of the at least one sub-time-domain resource, the at least first RS resource does not occupy in the time domain the time-domain resource of the first time slot.

As one embodiment, as long as the first time slot does not belong to any one of the at least one sub-time-domain resource, the at least first RS resource does not occupy in the time domain the time-domain resource of the first time slot.

As one sub-embodiment of this embodiment, the first RS resource does not occupy in the time domain any time slot other than the at least one sub-time-domain resource in the first time-domain resource.

As one sub-embodiment of this embodiment, a first node should assume that a reference signal is not sent in any time slot other than the at least one sub-time-domain resource in the first time-domain resource.

As one embodiment, the phrase "the first time slot belongs to any one of the at least one sub-time-domain resource" comprises: any sub-time-domain resource in the at least one sub-time-domain resource comprises the first time slot.

As one embodiment, the phrase "the first time slot belongs to any one of the at least one sub-time-domain resource" comprises: the first time slot is one time slot in any sub-time-domain resource in the at least one sub-time-domain resource.

As one embodiment, the meaning of a phrase "each sub-time-domain resource in the at least one sub-time-domain resource is one subset of the first time-domain resource" refers to: each sub-time-domain resource in the at least one sub-time-domain resource is one true subset of the first time-domain resource.

As one embodiment, the meaning of the phrase "each sub-time-domain resource in the at least one sub-time-domain resource is one subset of the first time-domain resource" refers to: each sub-time-domain resource in the at least one sub-time-domain resource belongs to the first time-domain resource.

As one embodiment, the meaning of the phrase "each sub-time-domain resource in the at least one sub-time-domain resource is one subset of the first time-domain resource" refers to: any time slot in each sub-time-domain resource in the at least one sub-time-domain resource belongs to the first time-domain resource.

As one embodiment, the meaning of the phrase "each sub-time-domain resource in the at least one sub-time-domain resource is one subset of the first time-domain resource" refers to: each sub-time-domain resource in the at least one sub-time-domain resource is part of time-domain resources in the first time-domain resource.

As one embodiment, each sub-time-domain resource in the at least one sub-time-domain resource is pre-defined.

As one embodiment, each sub-time-domain resource in the at least one sub-time-domain resource is pre-configured.

As one embodiment, each sub-time-domain resource in the at least one sub-time-domain resource is equally spaced in the time domain.

As one embodiment, each sub-time-domain resource in the at least one sub-time-domain resource depends on one timer.

As one sub-embodiment of this embodiment, in the first time-domain resource, a first timer is started or restarted.

As one sub-embodiment of this embodiment, the first timer is started or restarted with each sub-time-domain resource in the at least one sub-time-domain resource.

As one sub-embodiment of this embodiment, the at least one sub-time-domain resource comprises a time when the one timer in the first time-domain resource is running.

As one sub-embodiment of this embodiment, the at least one sub-time-domain resource is the time when the one timer in the first time-domain resource is running.

As one sub-embodiment of this embodiment, an active time of the first DTX does not comprise the time when the one timer is running.

As one sub-embodiment of this embodiment, the time when the one timer is running is an inactive time of the first DTX.

As one sub-embodiment of this embodiment, whether the one timer is running in the first time slot is used for determining the position of the first time slot in the first time-domain resource; whether the at least first RS resource occupies in the time domain the time-domain resource of the first time slot depends on the position of the first time slot in the first time-domain resource.

As one subsidiary embodiment of this sub-embodiment, whether the at least first RS resource occupies in the time domain the time-domain resources of the first time slot depends on whether the one timer is running in the first time slot.

As one subsidiary embodiment of this sub-embodiment, if the one timer is running in the first time slot, the at least first RS resource occupies in the time domain the time-domain resource of the first time slot; and if the one timer is not running in the first time slot, the at least first RS resource does not occupy in the time domain the time-domain resource of

32

the first time slot.

As one subsidiary embodiment of this sub-embodiment, if the one timer is running in the first time slot, the at least first RS resource does not occupy in the time domain the time-domain resource of the first time slot; and if the one timer is not running in the first time slot, the at least first RS resource occupies in the time domain the time-domain resource of the first time slot.

## Embodiment 13

Embodiment 13 illustrates a schematic diagram of a first time slot and a first time-domain resource according to one embodiment of the present application, as shown in FIG. 13. In FIG. 13, the horizontal axis represents time, each box represents one time slot, the box filled with slashes represents the time slot occupied by a first RS resource, and the blank box represents the time slot not occupied by the first RS resource.

As one embodiment, a periodicity of the first RS resource is 4 time slots, and time slots 1301, 1302, 1303, 1304, 1305 and 1306 are configured to the first RS resource.

As one embodiment, the first RS resource occupies in a time domain a time-domain resource of the first time slot; and the first time slot is any one of the time slot 1304 and the time slot 1305.

As one embodiment, the first RS resource does not occupy in the time domain the time-domain resource of the first time slot; and the first time slot is any one of the time slot 1302 and the time slot 1303.

As one embodiment, this embodiment does not limit the periodicity of the first RS resource in the present application.

As one embodiment, this embodiment does not limit a length of the first time-domain resource in the present application.

As one embodiment, this embodiment does not limit a starting position of the first time-domain resource in the present application.

As one embodiment, this embodiment does not limit the number and position of time slots comprised in the first time-domain resource in the present application.

As one embodiment, this embodiment does not limit the number of time slots configured to the first RS resource that is occupied by the first RS resource in the first time slot resource in the present application.

As one embodiment, this embodiment does not limit the number of time slots configured to the first RS resource that are not occupied by the first RS resource in the first time slot resource in the present application.

As one embodiment, this embodiment does not limit the position of the time slot configured to the first RS resource that is occupied by the first RS resource in the first time slot resource in the present application.

As one embodiment, this embodiment does not limit the position of the time slot configured to the first RS resource that is not occupied by the first RS resource in the first time slot resource in the present application.

As one embodiment, this embodiment does not limit whether a starting moment of the first time-domain resource in the present application is the starting moment of one time slot.

As one embodiment, this embodiment does not limit whether a cut-off moment of the first time-domain resource in the present application is the cut-off moment of one time slot.

As one embodiment, this embodiment does not limit whether the first time-domain resource in the present application is continuous in the time domain.

## Embodiment 14

Embodiment 14 illustrates a schematic diagram of a DTX cycle of first DTX according to one embodiment of the present application, as shown in FIG. 14. In FIG. 14, the horizontal axis represents time, each box represents an active time of the first DTX, a time interval between two boxes represents an inactive time of the first DTX, each DTX cycle of the first DTX comprises the active time of the first DTX and the inactive time of the first DTX, and a time length of each DTX cycle of the first DTX is a first cycle length.

As one embodiment, a first time-domain resource comprises the inactive time of the first DTX.

As one embodiment, the first time-domain resource belongs to the inactive time of the first DTX.

As one embodiment, the first time-domain resource belongs to one DTX cycle of the first DTX.

As one embodiment, the first time-domain resource belongs to any DTX cycle of the first DTX.

As one embodiment, the first time-domain resource belongs to the inactive time within one DTX cycle of the first DTX.

As one embodiment, the first time-domain resource belongs to the inactive time within any DTX cycle of the first DTX.

As one embodiment, the first time-domain resource is the inactive time of the first DTX.

As one embodiment, the first time-domain resource is the inactive time within one DTX cycle of the first DTX.

As one embodiment, the first time-domain resource is the inactive time within any DTX cycle of the first DTX.

As one embodiment, a length of the first time-domain resource is equal to that of the inactive time within one DTX cycle of the first DTX.

As one embodiment, the length of the first time-domain resource is less than that of the inactive time within one DTX cycle of the first DTX.

As one embodiment, the lengths of the active times within any two DTX cycles in the first DTX are equal.

As one embodiment, there are two DTX cycles in the first DTX, and the lengths of the active times within the two DTX cycles are not equal.

As one embodiment, this embodiment only illustrates the relationship among the DTX cycle of the first DTX, the active time of the first DTX and the first time-domain resource. This embodiment does not limit whether the lengths of the active times of the first DTX within different DTX cycles in the present application are the same, and, this embodiment does not limit the DTX cycle to which the first time-domain resource in the present application belongs, and, this embodiment does not limit whether the first time-domain resource in the present application is less than the inactive time within one DTX cycle.

## Embodiment 15

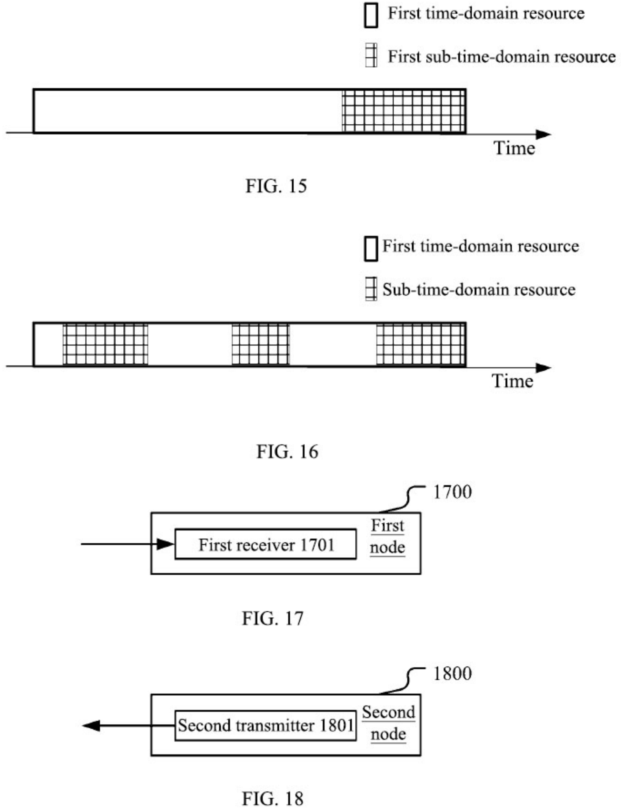

Embodiment 15 illustrates a schematic diagram of a first sub-time-domain resource according to one embodiment of the present application, as shown in FIG. 15. In FIG. 15, the horizontal axis represents time, the thick solid box represents a first time-domain resource, and the box filled with a cross represents the first sub-time-domain resource.

In Embodiment 15, the first sub-time-domain resource is one subset of the first time-domain resource.

As one embodiment, the first sub-time-domain resource comprises a duration before a cut-off moment of the first time-domain resource; If a first time slot belongs to the first sub-time-domain resource, at least a first RS resource occupies in a time domain a time-domain resource of the first time slot; and if the first time slot belongs to the time-domain resource other than the first sub-time-domain resource in the first time-domain resource, the at least first RS resource does not occupy in the time domain the time-domain resource of the first time slot.

As one embodiment, this embodiment only illustrates the relationship between the first sub-time-domain resource and the first time-domain resource. This embodiment does not limit a position of the first sub-time-domain resource in the first time-domain resource in the present application, and, this embodiment does not limit lengths of the first time-domain resource and the first sub-time-domain resource in the present application.

## Embodiment 16

Embodiment 16 illustrates a schematic diagram of at least one sub-time-domain resource according to one embodiment of the present application, as shown in FIG. 16. In FIG. 16, the horizontal axis represents time, the thick solid box represents a first time-domain resource, and each box filled with a cross represents one sub-time-domain resource.

In Embodiment 16, the first time-domain resource comprises at least one sub-time-domain resource, and each sub-time-domain resource in the at least one sub-time-domain resource is one subset of the first time-domain resource.

As one embodiment, the first time-domain resource comprises 3 sub-time-domain resources; if a first time slot belongs to any one of the 3 sub-time-domain resources, at least a first RS resource occupies in a time domain a time-domain resource of the first time slot; and if the first time slot belongs to the time-domain resource other than the 3 sub-time-domain resources in the first time-domain resource, the at least first RS resource does not occupy in the time domain the time-domain resource of the first time slot.

As one embodiment, this embodiment only illustrates the relationship between the sub-time-domain resource and the first time-domain resource. This embodiment does not limit a position of each sub-time-domain resource in the at least one sub-time-domain resource in the present application in the first time-domain resource, and, this embodiment does not limit lengths of the first time-domain resource and each sub-time-domain resource in the present application, and, this embodiment does not limit the number of sub-time-domain resources comprised in the first time-domain resource in the present application.

## Embodiment 17

Embodiment 17 illustrates a structural block diagram of a processing apparatus used in a first node according to one embodiment of the present application, as shown in FIG. 17. In FIG. 17, a processing apparatus 1700 in the first node comprises a first receiver 1701.

The first receiver 1701 receives a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal.

In Embodiment 17, whether the at least first RS resource occupies in the time domain the time-domain resource of the first time slot depends on at least one of a length of the first time-domain resource and a position of the first time slot in the first time-domain resource.

As one embodiment, the first signaling configures the first time slot to each RS resource in the at least first RS resource.

As one embodiment, the at least first RS resource comprises a plurality of RS resources, and the first time slot is not configured to at least one RS resource in the plurality of RS resources.

As one embodiment, the first receiver 1701 receives a first message, the first message being one RRC message, and the first message comprising a first time length and a first cycle length of first DTX, wherein at least the first time length is used for determining an active time of the first DTX; at least the first cycle length is used for determining a duration of each DTX cycle of the first DTX; and the first time-domain resource belongs to an inactive time of the first DTX.

As one embodiment, the second signaling is received after the first message is received; and the second signaling is a signaling of a protocol layer below an RRC sublayer.

As one embodiment, only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

As one embodiment, the first sub-time-domain resource depends on a target timer, and a moment when the target timer expires is used for determining a starting moment of the first sub-time-domain resource.

As one embodiment, the first time-domain resource comprises at least one sub-time-domain resource, and each sub-time-domain resource in the at least one sub-time-domain resource is one subset of the first time-domain resource; only when the first time slot belongs to any one of the at least one sub-time-domain resource, the at least first RS resource occupies in the time domain the time-domain resource of the first time slot; and whether the at least first RS resource occupies in the time domain the time-domain resource of the first time slot depends on the position of the first time slot in the first time-domain resource.

As one embodiment, the first receiver 1701 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1701 comprises the antenna 452, the receiving device 454, the multi-antenna receiving processor 458, and the receiving processor 456 in FIG. 4 of the present application.

As one embodiment, the first receiver 1701 comprises the antenna 452, the receiving device 454, and the receiving processor 456 in FIG. 4 of the present application.

## Embodiment 18

Embodiment 18 illustrates a structural block diagram of a processing apparatus used in a second node according to one embodiment of the present application, as shown in FIG. 18. In FIG. 18, a processing apparatus 1800 in the second node comprises a second transmitter 1801.

The second transmitter 1801 sends a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receives a reference signal.

In Embodiment 18, whether the at least first RS resource occupies in a time domain the time-domain resource of the first time slot depends on at least one of a length of the first time-domain resource and a position of the first time slot in the first time-domain resource.

As one embodiment, the first signaling configures the first time slot to each RS resource in the at least first RS resource.

As one embodiment, the at least first RS resource comprises a plurality of RS resources, and the first time slot is not configured to at least one RS resource in the plurality of RS resources.

As one embodiment, the second transmitter 1801 sends a first message, the first message being one RRC message, and the first message comprising a first time length and a first cycle length of first DTX, wherein at least the first time length is used for determining an active time of the first DTX; at least the first cycle length is used for determining a duration of each DTX cycle of the first DTX; and the first time-domain resource belongs to an inactive time of the first DTX.

As one embodiment, the second signaling is received after the first message is received; and the second signaling is a signaling of a protocol layer below an RRC sublayer.

As one embodiment, only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

As one embodiment, the first sub-time-domain resource depends on a target timer, and a moment when the target timer expires is used for determining a starting moment of the first sub-time-domain resource.

As one embodiment, the first time-domain resource comprises at least one sub-time-domain resource, and each sub-time-domain resource in the at least one sub-time-domain resource is one subset of the first time-domain resource; only when the first time slot belongs to any one of the at least one sub-time-domain resource, the at least first RS resource occupies in the time domain the time-domain resource of the first time slot; and whether the at least first RS resource occupies in the time domain the time-domain resource of the first time slot depends on the position of the first time slot in the first time-domain resource.

As one embodiment, the second transmitter 1801 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1801 comprises the antenna 420, the transmitting device 418, the multi-antenna transmitting processor 471, and the transmitting processor 416 in FIG. 4 of the present application.

As one embodiment, the second transmitter 1801 comprises the antenna 420, the transmitting device 418, and the transmitting processor 416 in FIG. 4 of the present application.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macro cellular base stations, micro cellular base stations, Femtocells, relay base stations, gNBs (NR nodes B), TRPs (Transmitter Receiver Points), and other wireless communication devices.

The above is only a preferred embodiment of the present application and is not used for limiting the scope of protection of the present application. Any modifications, equivalent substitutions, improvements and the like made within the spirit and principles of the present invention shall be comprised within the scope of protection of the present invention.

**Claims**

1. A first node used for wireless communication, comprising:

   a first receiver for receiving a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,
   wherein whether the at least first RS resource occupies in a time domain a time-domain resource of the first time slot depends on at least one of a length of the first time-domain resource and a position of the first time slot in the first time-domain resource.

2. The first node according to claim 1, wherein the first signaling configures the first time slot to each RS resource in the at least first RS resource.

3. The first node according to claim 1 or 2, wherein the at least first RS resource comprises a plurality of RS resources, and the first time slot is not configured to at least one RS resource in the plurality of RS resources.

4. The first node according to any one of claims 1 to 3, comprising:

a first receiver for receiving a first message, the first message being one RRC message, and the first message comprising a first time length and a first cycle length of first DTX,

wherein at least the first time length is used for determining an active time of the first DTX; at least the first cycle length is used for determining a duration of each DTX cycle of the first DTX; and the first time-domain resource belongs to an inactive time of the first DTX.

5. The first node according to claim 4, wherein the second signaling is received after the first message is received; and the second signaling is a signaling of a protocol layer below an RRC sublayer.

6. The first node according to any one of claims 1 to 5, wherein only when the first time slot belongs to a first sub-time-domain resource, the at least first RS resource occupies in the time domain the time-domain resource of the first time slot; the first sub-time-domain resource is one subset of the first time-domain resource; and whether the at least first RS resource occupies in the time domain the time-domain resource of the first time slot depends on the position of the first time slot in the first time-domain resource.

7. The first node according to claim 6, wherein the first sub-time-domain resource depends on a target timer, and a moment when the target timer expires is used for determining a starting moment of the first sub-time-domain resource.

8. The first node according to any one of claims 1 to 5, wherein the first time-domain resource comprises at least one sub-time-domain resource, and each sub-time-domain resource in the at least one sub-time-domain resource is one subset of the first time-domain resource; only when the first time slot belongs to any one of the at least one sub-time-domain resource, the at least first RS resource occupies in the time domain the time-domain resource of the first time slot; and whether the at least first RS resource occupies in the time domain the time-domain resource of the first time slot depends on the position of the first time slot in the first time-domain resource.

9. A second node used for wireless communication, comprising:

a second transmitter for sending a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,

wherein whether the at least first RS resource occupies in a time domain a time-domain resource of the first time slot depends on at least one of a length of the first time-domain resource and a position of the first time slot in the first time-domain resource.

10. A method in a first node used for wireless communication, comprising:

receiving a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,

wherein whether the at least first RS resource occupies in a time domain a time-domain resource of the first time slot depends on at least one of a length of the first time-domain resource and a position of the first time slot in the first time-domain resource.

11. A method in a second node used for wireless communication, comprising:

sending a first signaling and a second signaling, the first signaling being used for configuring at least the former of a resource occupied by at least a first RS resource in a frequency domain and a time-domain resource occupied by the at least first RS resource on a physical resource block, the second signaling being used for determining a first time-domain resource, and the first time-domain resource comprising a first time slot; and, on the at least first RS resource, receiving a reference signal,

wherein whether the at least first RS resource occupies in a time domain a time-domain resource of the first time slot depends on at least one of a length of the first time-domain resource and a position of the first time slot in the first time-domain resource.

100

First node

Receive a first signaling and a second signaling — 101

On at least a first RS resource, receive a reference signal — 102

FIG. 1

5GS/EPS 200

HSS/UDM — 220

RAN
202

MME/AMF/
SMF — 211

Others
MME/AMF/SMF — 214

UE — 201

Node — 203

UE — 241

Other
nodes — 204

S-GW/UPF — 212

P-GW/UPF — 213

Internet service — 230

5GC/EPC
210

FIG. 2

Control plane
300

User plane
350

L3

RRC — 306

SDAP — 356

305

PDCP — 304

355

L2

PDCP — 354

L2

RLC — 303

RLC — 353

MAC — 302

MAC — 352

L1

PHY — 301

L1

PHY — 351

FIG. 3

EP 4 654 511 A1

FIG. 4

FIG. 5

FIG. 6

39

Second signaling ——Is——▶ Received after a first message is received

Second signaling ——Yes——▶ Signaling of a protocol layer below an RRC sublayer

FIG. 7

A first signaling configures a first time slot ——To——▶ Each RS resource in at least a first RS resource

FIG. 8

At least first RS resource ——Comprise——▶ A plurality of RS resources

First time slot ——Not configured to——▶ At least one RS resource in the plurality of RS resources

FIG. 9

Only when a first time slot belongs to a first sub-time-domain resource — — ▶ At least a first RS resource occupies in a time domain a time-domain resource of the first time slot

FIG. 10

First sub-time-domain resource ——Depend on——▶ Target timer

FIG. 11

Only when a first time slot belongs to any one of at least one sub-time-domain resource ——▶ At least a first RS resource occupies in a time domain a time-domain resource of the first time slot

FIG. 12

▨ Time slot occupied by a first RS resource

1301   1302   1303   1304   1305   1306

First time-domain resource                    Time

FIG. 13

Active time of first DTX | Inactive time of the first DTX | Active time of first DTX | Inactive time of the first DTX | Active time of first DTX

Time

DTX cycle of the first DTX | DTX cycle of the first DTX

FIG. 14

EP 4 654 511 A1

☐ First time-domain resource

▦ First sub-time-domain resource

FIG. 15

☐ First time-domain resource

▦ Sub-time-domain resource

FIG. 16

1700

First node

First receiver 1701

FIG. 17

1800

Second node

Second transmitter 1801

FIG. 18

41

## INTERNATIONAL SEARCH REPORT

| International application No. |
| --- |
| **PCT/CN2024/071274** |

| | |
| --- | --- |
| **A. CLASSIFICATION OF SUBJECT MATTER** | |
| H04L 5/00(2006.01)i | |

According to International Patent Classification (IPC) or to both national classification and IPC

| **B. FIELDS SEARCHED** |
| --- |
| Minimum documentation searched (classification system followed by classification symbols) |
| IPC:H04L, H04W, H04Q |

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, IEEE: 第二 信令 资源 频域 时域 时隙 RS second signal resource frequency time domain slot

| **C. DOCUMENTS CONSIDERED TO BE RELEVANT** | | |
| --- | --- | --- |
| Category* | Citation of document, with indication, where appropriate, of the relevant passages | Relevant to claim No. |
| X | CN 114124320 A (SHANGHAI LANGBO COMMUNICATION TECHNOLOGY CO., LTD.) 01 March 2022 (2022-03-01) <br> description, paragraphs [0076]-[0370], and figures 5-11 | 1-11 |
| A | CN 113645006 A (SHANGHAI LANGBO COMMUNICATION TECHNOLOGY CO., LTD.) 12 November 2021 (2021-11-12) <br> entire document | 1-11 |
| A | CN 113708901 A (SHANGHAI LANGBO COMMUNICATION TECHNOLOGY CO., LTD.) 26 November 2021 (2021-11-26) <br> entire document | 1-11 |
| A | CN 114793150 A (SHANGHAI TUILUO COMMUNICATION TECHNOLOGY PARTNERSHIP ENTERPRISE (LIMITED PARTNERSHIP)) 26 July 2022 (2022-07-26) <br> entire document | 1-11 |
| A | NEC. "Time domain resource allocation for mini-slot" <br> *3GPP TSG RAN WG1 Meeting #88 R1-1701981*, 17 February 2017 (2017-02-17), <br> entire document | 1-11 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **30 March 2024** | **03 April 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071274**

| Patent document cited in search report | | | Publication date (day/month/year) | Patent family member(s) | | | Publication date (day/month/year) |
|---|---|---|---|---|---|---|---|
| CN | 114124320 | A | 01 March 2022 | None | | | |
| CN | 113645006 | A | 12 November 2021 | None | | | |
| CN | 113708901 | A | 26 November 2021 | None | | | |
| CN | 114793150 | A | 26 July 2022 | WO | 2022161233 | A1 | 04 August 2022 |
| | | | | US | 2023362668 | A1 | 09 November 2023 |

Form PCT/ISA/210 (patent family annex) (July 2022)